# EUROPEAN PATENT APPLICATION

(11) **EP 4 589 107 A1**
(43) Date of publication of application: **23.07.2025**
(21) Application number: 24153150.8
(22) Date of filing: 22.01.2024
(51) Int. Cl.: E06B 3/66, E06B 3/663, E06B 3/673, E06B 3/677

(54) **PROCESSING A GLASS SHEET ASSEMBLY FOR A VACUUM INSULATED GLASS UNIT**

(71) Applicant: VKR Holding A/S, 2970 Hørsholm (DK)
(72) Inventor: Andersen, Søren Vejling, 2970 Hørsholm (DK); Johnsen, Simon, 2970 Hørsholm (DK); De Rycke, Thibault, 2970 Hørsholm (DK); Nielsen, Karsten Hansgaard, 2970 Hørsholm (DK)
(74) Representative: Høiberg P/S

(57) **Abstract**

The present disclosure relates to a method of processing a glass sheet assembly (1) for a vacuum insulated glass (VIG) unit (30), wherein the method comprises the step of
- providing a glass sheet assembly (1) comprising a first glass sheet (3) and a second glass sheet (4), wherein a plurality of support structures (2) for maintaining a gap (5) between said first glass sheet (3) and said second glass sheet (4) of the vacuum insulated glass unit (30) are arranged between major surfaces (3a, 4a) of the glass sheets (3, 4), and wherein the glass sheet assembly (1) comprises a solder material (7) for providing an edge sealing for enclosing and sealing the gap (5) between the glass sheets (3, 4),

the method comprising the subsequent steps of
- heating the solder material (7) in a first softening step (ST1) so as to soften the solder material by moving one or more laser light beams (9, 9_1, 9_2, 9_3, 9_4, 9_5) along the lengthwise extent (LDS) of the solder material (7) at a first distance (LADIS1) between the centre of the spot (CS) of the one or more laser light beams at the solder material (7) and an adjacent outer edge (3LE) of the first glass sheet (3), and
- subsequently heating the solder material (7) in a second softening step (ST2) so as to soften the solder material by moving one or more laser light beams (9, 9_1, 9_2, 9_3, 9_4, 9_5) along the lengthwise extent (LDS) of the solder material (7),

wherein at the second distance (LADIS2) to the adjacent outer edge (3LE) the heating power (HP) from the one or more laser light beams (9, 9_1, 9_2, 9_3, 9_4, 9_5) at the second softening step (ST2) is larger (HP₁) than the heating power (HP₂) during the first softening step (STI),
and the second distance (LADIS2) being larger than the first distance (LADIS 1).

## Description

The present disclosure relates to a method of processing a glass sheet assembly for the manufacturing of a vacuum insulated glass (VIG) unit.

### Background

Vacuum insulated glass (VIG) units have been developed for providing window glazing with improved thermal insulating properties. In the manufacturing of vacuum insulated glass (VIG) units it is well known that the two glass sheets should be clamped together while a solder material situated between the glass sheets, typically near the edges of the glass sheets, is heated to a temperature where the solder material is in a softened state for providing hermetic airtight seal of the gap between the glass sheets. The clamping may be conducted by means of a plurality of clamps provided to the opposing outer side surfaces of the two glass sheets and heating of the solder material may be made by general heating of the glass sheet assembly in an oven or by local heating by means of e.g. laser light. From EP 2 900 891 is known to locally heat the solder material by means of laser light and evacuate the gap via a pump-out tube provided through an opening in one of the glass sheets, while the solder material is sufficiently softened to clamp the two glass sheets together, thereby forming the hermetic sealing of the gap. When the gap is sufficiently evacuated, such as to or below 10⁻² Torr, the pump-out tube is sealed off to preserve the vacuum established in the gap of the VIG unit.

It is an object of the present disclosure to improve the manufacturing process of vacuum insulated glass (VIG) units to make the process more efficient and lower the production costs of such unit.

### Brief description of the disclosure

When the solder material has been softened by local heating and force clamping is applied to force the two glass sheets together, the width of the solder material will increase as the thickness of the solder material layer between the glass sheets is reduced. When local heating is applied, the glass sheets are at a temperature lower than the softened solder material and will act as a heat sink and have a cooling effect on the solder material. It has been realised by the present invention that since the solder material is applied adjacent to an outer edge of the glass sheet assembly, the solder material farthest from the adjacent outer edge will be subject to a stronger heat sink than the solder material closest to the adjacent outer edge of the glass sheet assembly and the temperature of the solder material farthest from the adjacent outer edge will for that reason be lower than the solder material closer to the adjacent edge which will provide uneven mechanical properties, stresses and wetting across the solder material, which may lead to reduced durability of the sealing of the gap. A solution is to perform the softening of the solder material in two steps, where in the latter step the heating power has increased form the former step at a distance to the adjacent edge of the glass sheet assembly being larger that the distance between the centre of the spot of the laser light beam and the adjacent edge of the glass sheet assembly during the former step, which compensates at least partly form the difference in the influence of the heat sink of the glass sheets at the two different distances.

Thus, the present invention relates to a method of processing a glass sheet assembly for a vacuum insulated glass (VIG) unit, wherein the method comprises the step of
- providing a glass sheet assembly comprising a first glass sheet and a second glass sheet, wherein a plurality of support structures for maintaining a gap between said first glass sheet and said second glass sheet of the vacuum insulated glass unit are arranged between preferably parallel major surfaces of the glass sheets, and wherein the glass sheet assembly comprises a solder material for providing an edge sealing for enclosing and sealing the gap between the glass sheets,

the method comprising the subsequent steps of
   - heating the solder material in a first softening step so as to soften the solder material by moving one or more laser light beams along the lengthwise extent of the solder material at a first distance between the centre of the spot of the one or more laser light beams at the solder material and an adjacent outer edge of the first glass sheet, and
   - subsequently heating the solder material in a second softening step so as to soften the solder material by moving one or more laser light beams along the lengthwise extent of the solder material,
wherein at the second distance (LADIS2) to the adjacent outer edge (3LE) the heating power (HP) from the one or more laser light beams (9, 9_1, 9_2, 9_3, 9_4, 9_5) at the second softening step (ST2) is larger (HP₁) than the heating power (HP₂) during the first softening step (ST1),
, and the second distance being larger than the first distance.

In other words, the heating power from the one or more laser light beams at the second softening step at a second distance to the adjacent outer edge of the first glass sheet is larger than the heating power at the second distance to the adjacent outer edge during the first softening step.

The heating power from the one or more laser light beams at the solder material at the first distance to the adjacent outer edge of the first glass sheet is preferably lower than the heating power at the solder material at the second distance during the second step.

The second distance is preferably in the range of 1 to 3 millimetres larger than the first distance.

The heating power from the one or more laser light beams at the second distance to the adjacent outer edge is preferably at least 25% higher in the second softening step (ST2) than in the first softening step, such as at least 35% higher.

The centre of the spot of the one or more laser light beams in the second softening step is preferably changed from the first distance to the adjacent outer edge to the second distance to the adjacent outer edge. Alternatively or additionally, the width of the spot of the one or more laser light beams may in the second softening step be increased as compared to the width of the spot of the one or more laser light beams in the first softening step, such as increased by 1 to 6 millimetres such as by 2-4 millimetres.

A force clamping of the glass sheet assembly is preferably provided by means of a clamping arrangement so that the glass sheets clamp and deform the solder material, such as wherein the force clamping comprises providing a pressure difference between the pressure in the gap and the pressure surrounding the glass sheet assembly. The force clamping is preferably provided by the step of evacuating the gap.

The force clamping may in particular be provided during the second softening step and preferably also during the first softening step , and it may in particular be initiated when the solder material has reached a temperature in the range of 10 to 30 °C below the maximum temperature reached by the solder material during the softening steps in particular at the end of the first softening step.

The force clamping may be provided when the solder material has reached a temperature in the range of 350 to 400 °C, such as in the range of 365 to 385 °C.

The pressure difference between the pressure in the gap and the pressure surrounding the glass sheet assembly is at least 0.5 bar, such as at least 0.8 bar, such as at least such as at least 0.9 bar.

The power of each of the one or more laser light beams is preferably at least 500 W, such as at least 750 W, in particular at least 1000 W.

The solder material is preferably a glass solder material comprising a low melting point glass solder frit material. Glass solder material has the advantage of having mechanical and thermal properties close to those of the glass sheets, which provides for a durable and strong connection between the two. However, some glass solder compositions may include components that have less advantageous environmental properties that can be challenging when deposing of or recycling of scrapped VIG units. Alternatively, a metal solder material may be used, comprising a suitable alloy for the purpose.

The glass solder material is preferably heated to a temperature in the range of 40 to 120 °C, preferably in the range of 60 to 100 °C, above the glass transition temperature of the glass solder material, during the first softening step and the second softening step of softening the glass solder material so as to provide a suitable sealing.

The glass solder material is preferably heated to a target temperature in the range of 350 to 420 °C, such as in the range of 370 to 410 °C, during the first softening step and the second softening step.

It is generally understood that the glass transition temperature may be a rated glass transition temperature as well as the melting temperature of the glass solder material which is defined by the manufacturer and/or supplier of the glass solder material.

The step of providing the pressure difference is preferably provided when the glass solder material has reached a temperature in the range of 30 to 100 °C, preferably in the range of 40 to 80 °C, above the glass transition temperature of the glass solder material.

The step of providing the pressure difference is preferably provided when the glass solder material has reached a temperature in the range of 350 to 400 °C, such as in the range of 365 to 385 °C to provide a suitable sealing of the gap.

The force clamping is preferably provided when the solder material has reached a temperature in the range of 350 to 380 °C, such as in the range of 365 to 375 °C.

The first glass sheet and the second glass sheet extend substantially horizontally.

The first glass sheet as well as the second glass sheet are preferably tempered glass sheets such as thermally tempered glass sheets. The local heating of the solder material is particular advantageous when using tempered glass sheets, in particular thermally tempered glass sheets as excessive heating of the glass sheets is avoided, which could compromise the tempering of the glass sheets.

The full extent of the solder material of the glass sheet assembly is preferably exposed to a laser light beam at least 500 times, such as at least 1000 times, such as at least 1500 times during the step of softening the solder material, the laser light being the heating source of the solder material.

The solder material has preferably a width between 2 mm and 8 mm, such as between 3 mm and 6 mm, for example between 4 mm and 5 mm (both end points included) at initiation of the softening step.

The solder material width is during the forming of the hermetic sealing deformed, such as at least partly by means of said pressure difference, so that the final solder material width is between 4 mm and 16 mm, such as between 5 mm and 11 mm, for example between 7 mm and 9 mm when the pressure difference is eliminated.

One or both of the first and second glass sheets have in a preferred embodiment a thickness between 1 mm and 6 mm, such as between 2 mm and 4 mm, for example between 2.5 mm and 3.5 mm including both end points of the range.

The distance between the major glass sheet surfaces facing the gap of the final vacuum insulated glass unit is preferably 0.5 mm or below, such as 0.3 mm or below, for example 0.2 mm or below.

One or both of the major glass sheet surfaces facing the gap comprises preferably one or more coatings, such as comprising one or more low-e coatings. The one or more coatings are preferably terminated with a distance to the outer glass sheet edge so that the glass material of the glass sheet comprising the one or more coatings is direct contact with the solder material. The one or more coatings are preferably terminated so that the solder material is substantially not in contact with the one or more coatings after the heating and softening of the solder material by the one or more laser light beams is terminated.

The method may further comprise the consecutive steps of
- evacuating the gap to a substantially vacuum, and
- sealing off the gap from the surroundings, so as to obtain the vacuum insulated glass unit.

The first softening step and second softening step may be provided at an edge sealing station of a production line, and the method may further comprise the consecutive steps of
a) removing the glass sheet assembly from the edge sealing station of the production line,
b) positioning the glass sheet assembly at an evacuation station of the production line,
c) evacuating the gap to a substantially vacuum, and
d) sealing off the gap from the surroundings so as to obtain the vacuum insulated glass unit.

The force clamping is preferably eliminated when or after the first and second softening steps are finished, such as wherein force clamping is eliminated at a time after said heating by means of the one or more laser light beams being stopped.

The one or more laser light beams may be moved in the lengthwise direction of the solder material at a combined speed, i.e. the sum of the speed of the individual laser light beam, of at least 20 m/s such as at least 40 m/s during the first and/or second softening step.

The one or more laser light beams may in particular each be moved in the lengthwise direction of the solder material at a speed of at least 20 m/s such as at least 40 m/s during the first and/or second softening step.

The combined heating by means of the one or more laser light beams of each meter of the solder material is at least 30 joule, such as at least 45 joule, per each one-tenth of a second for a period of at least 30 seconds such as at least 60 seconds during the first and/or second softening step.

The solder material during the first and/or second softening step, is preferably heated by the one or more laser light beams so that the temperature difference between any two positions of the solder material along at least 90% of the full extent of the solder material, does not exceed 0.5 °C, such as does not exceed 0.2 °C, so as to ensure a uniform temperature of the solder material.

The solder material during the first and/or second softening step, is preferably heated by the one or more laser light beams so that the temperature difference between any two positions of the solder material along at least 90% of the full extent of the solder material, and with the same distance to the adjacent edge, does not exceed 0.5 °C, such as does not exceed 0.2 °C.

The temperature of the solder material is preferably increased by means of the one or more laser light beams by at least 30 °C such as at least 50 °C in less than 180 seconds, such as less than 120 seconds such as less than 100 seconds.

The power of each of the one or more laser light beams is preferably at least 500 W, such as at least 750 W, such as at least 1000W, during the first and/or second softening step.

The full extent of the solder material is preferably at least 1.5 meter, such as at least 2 meter, such as at least 3 meter.

The full extent of the solder material is preferably between 1.5 meter and 10 meter, such as between 2 meter and 8 meter, such as between 3 meter and 6 meter.

The full extent of the solder material is in a preferred embodiment exposed to a laser light beam at least 10 times per second, such as at least 20 times per second, such as at least 30 times per second during the first and/or second softening step.

The total heating time of the solder material during the first and second softening step by means of the one or more laser light beams is preferably less than 5 minutes, such as less than 2 minutes, such as less than 100 seconds.

The glass sheet assembly may be preheated, such as by means of convection heating, at a preheating station of a production line, and subsequently be moved into an edge sealing station while remained preheated so as to be subjected to said softening of the solder material by means of said one or more laser light beams.

The preheating may e.g. provide that an improved connection between the solder material and the glass sheets may be obtained when the local heating is provided. Additionally or alternatively, it may allow speeding up the manufacturing.

The glass sheet assembly is preferably preheated at the preheating station to a maximum preheating temperature of at least 30 °C below the highest temperature of the solder material reached during the step of softening the solder material, such as at least 50 °C below, preferably in the range of 30 °C to 140 °C below, more preferably in the range of 50 °C to 100 °C below the highest temperature of the solder material reached during the step of softening the solder material.

### Figures

The present disclosure will in the following be described in greater detail with reference to the accompanying drawings:
- Fig. 1: : illustrates a cross section of a vacuum insulated glass unit, according to embodiments of the present disclosure,
- Fig. 2: : illustrates a glass sheet assembly, according to embodiments of the present disclosure,
- Fig. 3 and fig. 4: : illustrate schematically a production line, according to various embodiments of the present disclosure,
- Fig. 3a: : illustrates schematically evacuation pumps for evacuating a gap, according to embodiments of the present disclosure,
- Fig. 5: : illustrates a glass sheet assembly prior to providing a force clamping at e.g. an edge sealing station, according to embodiments of the present disclosure,
- Fig. 6: : illustrates solder material which is locally heated, such as at an edge sealing station, according to embodiments of the present disclosure,
- Fig. 7: : illustrates a temperature graph relating to a processing of a glass sheet assembly, according to embodiments of the present disclosure,
- Fig. 8: : illustrates a temperature graph of a solder material subjected to preheating, according to embodiments of the present disclosure,
- Fig. 9: : illustrates a flowchart relating to a method of processing a glass sheet assembly for a vacuum insulated glass VIG unit, according to embodiments of the present disclosure,
- Figs. 10-14: : illustrates softening of solder material of a glass sheet assembly by means of local heating by one or more heaters, such as one or more emitters, such as e.g. one or more mirrors, according to various embodiments of the present disclosure,
- Fig. 15: : illustrates evacuation of a gap of a glass sheet assembly by means of an evacuation cup, according to embodiments of the present disclosure,
- Fig. 16: : illustrates a mechanical clamping arrangement providing force clamping, according to embodiments of the present disclosure,
- Figs. 17a-17b and 18a-18b: : illustrates control, such as adjustment, of heating power over the solder material strip width, according to embodiments of the present disclosure,
- Fig. 19: : illustrates heating power adjustment, according to embodiments of the present disclosure,
- Fig. 20: : illustrates heating power at a first distance, according to embodiments of the present disclosure, and
- Fig. 21: : illustrates a redirected/reflected heating beam that is transmitted through a chamber wall to a heat solder material strip of a glass sheet assembly, according to embodiments of the present disclosure.

### Detailed description

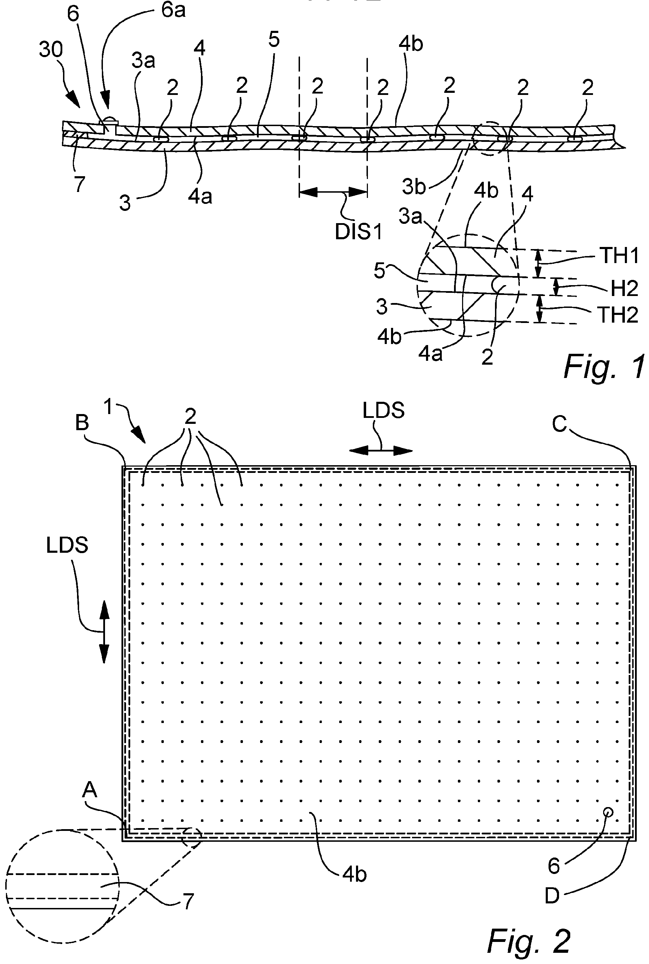

Fig. 1 illustrates schematically a cross section of a vacuum insulated glass (VIG) unit 30 according to embodiments of the present disclosure. The VIG unit 1 comprises a first glass sheet 3 comprising a first major surface 3a, and a second glass sheet 4 comprising a second major surface 4. These major glass sheet surfaces 3a, 4a faces each other and an evacuated gap 5 between the major surfaces 3a, 4a. The glass sheet surfaces 3a, 4a are substantially parallel.

A plurality of support structures 2 are arranged on the surface 3a with a mutual distance DIS1 to the neighbouring support structures. These support structures 2 are distributed inside the gap 5 according to a predetermined pattern, e.g. in rows and columns. The support structures 2 maintains the gap 5 between the major glass sheet surfaces 3a, 4a of the vacuum insulated glass (VIG) when the gap 5 has been evacuated and sealed.

The glass sheets 3, 4 are sealed together at the periphery of the glass sheets 3, 4 with the plurality of support structures 2 arranged between the major surfaces 3a, 4a in the gap 5. The sealing together of the first and second glass sheets 3, 4 comprises use of an edge seal material 7 such as a solder glass edge seal material or a solder metal edge seal material. In some embodiments, the edge seal material 7 may comprise solder material such as a glass solder material, for example a glass solder frit material, such as a low melting point glass solder frit material.

In some embodiments of the present disclosure, the low melting point glass solder frit material may have a rated melting temperature Tm below 500 °C, such as below 450 °C, such as below 410 °C.

In some embodiments of the present disclosure, the low melting point glass solder frit material may have a rated melting temperature Tm above 300 °C, such as above 340 °C, such as above 450 °C or above 370 °C.

In some embodiments of the present disclosure, the melting point glass solder frit material may have a rated glass transition temperature Tm below 360 °C, such as below 330 °C, such as below 315 °C. An example of a solder material 7 glass transition temperature may be between 290 °C and 320 °C, such as between 300 °C and 310 °C.

The sealing together of the glass sheet 3, 4 edges may provide a fused, rigid edge seal.

The glass sheets 3, 4 may be annealed glass sheets or tempered glass sheets, such as thermally tempered glass sheets.

One or both glass sheets 3, 4 may have a thickness TH1, TH2 between 1 mm and 6 mm, such as between 2 mm and 4 mm, for example between 2.5 mm and 3.5 mm including both end points. The glass sheets 3, 4 may be of the same or different thickness. Thermally tempered glass sheets 3, 4 may e.g. allow providing a VIG unit with larger mutual distance DIS 1 between the support structures 2 and/or may allow thinner glass sheets than annealed glass sheets.

The distance DIS1 between neighbouring support structures 2 may in embodiments of the present disclosure be between 20 mm and 70 mm, such as between 25 mm and 65 mm, such as between 35 mm and 45 mm.

The surface of the major surfaces 4a, 4b, 3a, 3b of thermally tempered glass sheets may be uneven due to e.g. a plurality of so-called roller waves, bending and/or due to global edge kink. These characteristics may originate from the manufacturing process of the thermally tempered glass sheets. The uneven surface is illustrated in fig. 1 by exaggerated glass sheet 3, 4 unevenness. In practice, the glass sheet unevenness may be less visible.

The gap 5 has been evacuated to a reduced pressure (e.g. provided at an evacuation and sealing station, see e.g. ref. 300 and description related thereto further below). In embodiments of the present disclosure, the pressure in the gap 5 may be below 0.05 mbar, such as below 0.005 mbar, such as 0.003 or 0.001 mbar or below. This may be obtained by means of an evacuation pump (not illustrated in fig. 1).

For this evacuation of the gap 5, the pump may have been connected directly or indirectly to an evacuation outlet 6, and after the evacuation, the evacuation outlet 6 is sealed by a gap sealing 6a, such as at least partly by means of a solder material and/or another sealing solution, such as a permanent sealing solution. In some embodiments, the evacuation hole 6 sealing solution 6a may comprise a solder material and/or a glass pipe to be sealed by heating when the gap 5 has been finally evacuated to provide a VIG unit. In fig. 1, the evacuation outlet 6 is provided by means of a through hole in the upper glass sheet 4. In other embodiments, the evacuation outlet 6 may be provided in the edge seal material 7 and/or between the edge seal material 7 and one of the glass sheets 3, 4.

In some embodiments, the evacuation of the gap 5 may be provided by means of a suction cup (not illustrated in fig. 1) arranged to cover an evacuation opening 6. In other embodiments, the evacuation may be provided inside an evacuation chamber, for example where the entire VIG unit assembly is placed inside the evacuation chamber of an evacuation and sealing station.

The support structures 2, placed by means of a dispenser or the like, maintains a distance H2 between the glass sheet surfaces 3a, 4a across the evacuated gap when the gap 5 has been evacuated and sealed to provide the final VIG unit.

The distance H2 between the major glass sheet surfaces 3a, 4a facing the gap may in embodiments of the present disclosure be 0.5 mm or below, such as 0.3 mm or below, for example 0.2 mm or below.

The distance H2 between the major glass sheet surfaces 3a, 4a facing the gap 5 may in embodiments of the present disclosure be between 0.05 mm and 0.6 mm, such as between 0.1 mm and 0.4 mm, such as between 0.15 and 0.25 mm. It is understood that the support structures may have a height matching such a gap height / distance between the glass sheet surfaces 3a, 4a.

It is generally to be understood that the final VIG unit 30 may e.g. be transparent to at least visible light, i.e. light in the spectrum that is visible to the human eye.

Fig. 2 illustrates schematically a glass sheet assembly 1 seen from above and towards a major exterior glass sheet surface 4b, prior to gap 5 evacuation and prior to permanent gap 5 sealing, according to embodiments of the present disclosure. See also fig. 1.

The glass sheet assembly 1 comprises the first glass sheet 3 and the second glass sheet 4. A plurality of the support structures 2 for maintaining a gap 5 between the surfaces 3a, 4a of the first glass sheet 3 and second glass sheet 4 are arranged between the major surfaces 3a, 4a of the glass sheets 3, 4. The support structures/spacers 2 are distributed in the gap 2 at different locations at the major surfaces of the glass sheets, as e.g. illustrated in fig. 2, and are visible through the glass sheet 4.

It is understood that dependent on the mutual distance DIS1 between adjacent support structures 2 and the size (area) of the major surfaces of the glass sheets 4, 3, the assembly 1 (and VIG unit) may comprise more than 500 support structures 2, such as more than 1000 support structures 2, such as more than 3000 or more than 5000 support structures 2 in the gap 5.

In some embodiments of the present disclosure, the support structures 2 may comprise or consist of metal, such as steel, titanium, iron or the like. In some embodiments, the structural integrity of the support structures 2 may be provided by means of a metal such as steel, titanium, iron or the like. In other embodiments, the support structures may comprise or consist of a ceramic material or a polymer material.

The glass sheet assembly 1 comprises the solder material 7 for providing an edge sealing for enclosing and sealing the gap 5 between the glass sheets 3,4. As can be seen, the solder material 7 is provided as elongated strips of solder material extending between corner portions A, B, C, D of the edge seal material 7.

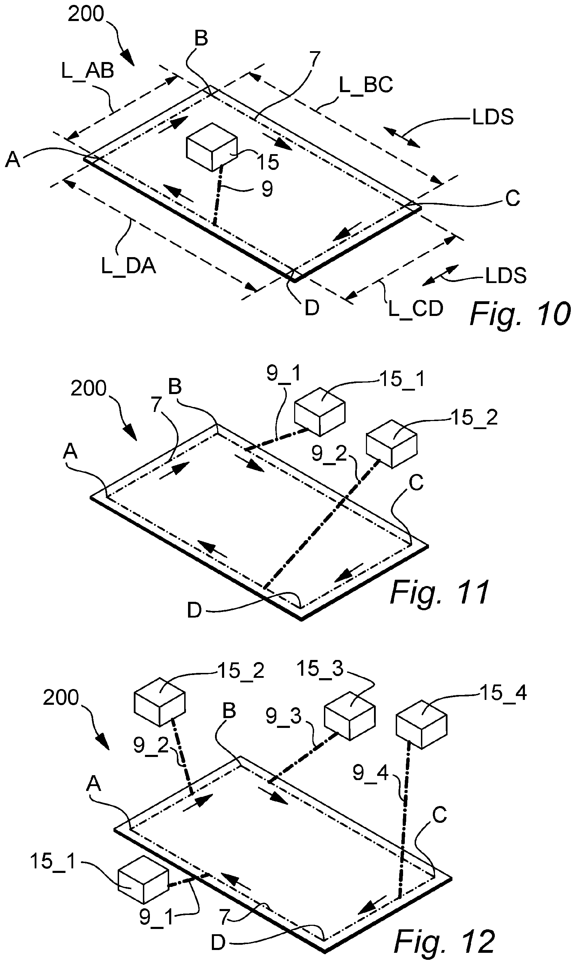

The solder material 7 strips A-B, B-C, C-D and D-A together encloses the gap 5 and enables providing a hermetic seal of the gap 5 after the solder material 7 has been processed as e.g. described in more details below. The solder material 7 strips A-B, B-C, C-D and D-A each have a longitudinal direction LDS that is substantially parallel to an edge of the glass sheets 3, 4. See e.g. also description further below, such as in relation to fig. 10. In fig. 2, the gap 5 of the glass sheet assembly 1 is not evacuated and the evacuation hole 6 is not sealed. Hence the gap 5 is in fluid communication with the exterior of the glass sheet assembly 1.

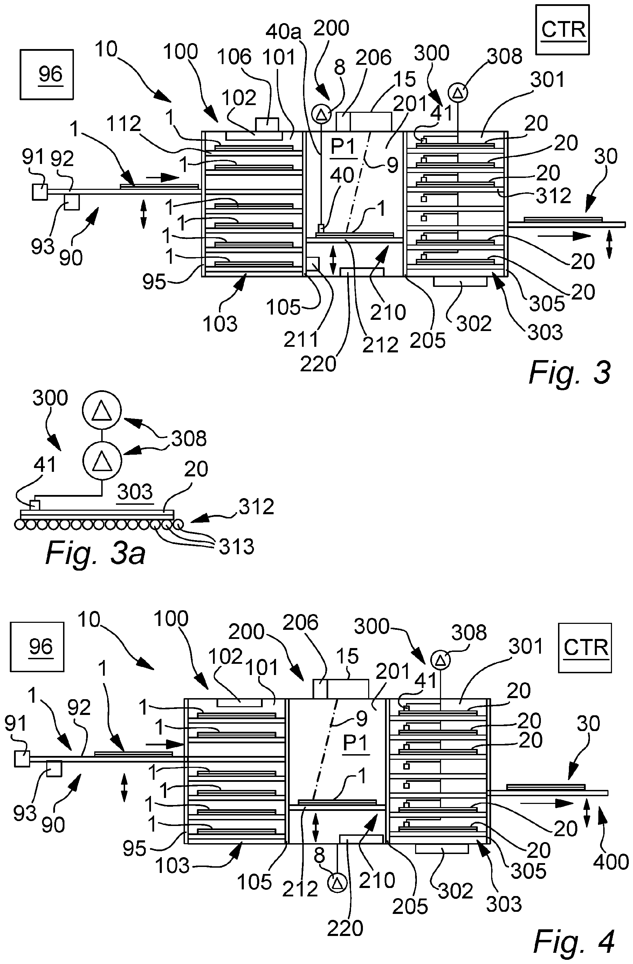

Figs. 3 and 4 illustrates schematically a production line 10 according to various embodiments of the present disclosure. The production line 10 comprises different consecutive processing stations 100, 200, 300. These comprises a preheating station 100, an edge sealing station 200 and an evacuation station 300.

A plurality of glass sheet assemblies 1 as e.g. described above are arranged in a preheating chamber 101 of the preheating station 100. The glass sheet assemblies 1 are provided into the preheating station by means of a transport system 90.

In figs. 3 and 4, a preheating chamber 101 of the preheating station 100 comprises a plurality of glass sheet assembly storage locations 103. Each of the glass sheet assembly storage locations 103 may comprise one or more glass sheet assembly supports 112 such as one or more shelves, rails, conveyers such as rollers and/or belts, and/or the like arranged above each other, e.g. in a rack arrangement. An example of a glass sheet assembly supports 112 comprising a conveyer comprising rollers is schematically illustrated in fig. 3a, however relating to a glass sheet assembly support 313 of the evacuation and sealing station 300.

In some embodiments of the present disclosure, more than one, such as more than two, such as more than five or more than ten glass sheet assembly storage locations 103 may be provided in the preheating chamber 101.

In some embodiments, between one and fifty, such as between two and forty, for example between five and twenty glass sheet assembly storage locations 103 (Both end points included) may be provided in the preheating chamber 101. In fig. 4 and 3, the chamber 101 comprises seven glass sheet assembly storage locations 103 that are vertically displaced above each other and which are each configured to receive and store one or more glass sheet assembly 1, such as at least one glass sheet assembly 1, for example at least two glass sheet assemblies 1, during preheating in the chamber 101.

The preheating may hence in embodiments of the present disclosure comprise convection heating a plurality of glass sheet assemblies 1 at the preheating station.

Since the glass sheet assembly storage locations 103 in fig. 3 and 4 are vertically displaced, the transport system 90 in figs. 3-4 comprises a lift which displaces the respective glass sheet assembly 1 vertically and moves the glass assembly 1 into an unoccupied glass sheet assembly storage location 103 in the preheating chamber 101 at the desired vertical level. This may be provided by moving the glass sheet assembly 1 vertically to a predefined position, e.g. opposite to a selected, unoccupied glass sheet assembly storage location 103. Then a gate, door or the like 95 may be opened whereafter the respective glass sheet assembly 1 is moved into the preheating chamber 101 by means of the transport system 90 and/or other conveyer means such as rollers, belts or the like at the respective glass sheet assembly storage location 103. The gate/door 95 is then closed again.

The transport system 90 may comprise one or more motors 91, such as one or more electric or pneumatic motors, configured to move the support 92 on which the glass sheet assembly supports vertically, e.g. along a rail and/or support frame (not illustrated).

The transport system 90 may comprise one or more motors 93, such as one or more electric motors and/or one or more pneumatic motors configured to move the glass sheet assembly 1 at least partly horizontally, into the preheating chamber 101.

In some embodiments, lifting parts, such as support 92 (e.g. a lift) and/or other parts, such as one or more motors 91, 93 and/or other parts of the transport system 90, such as chains, rails and/or the like, of the transport system 90 may be placed inside a transport chamber (not illustrated) to transport the glass sheet assembly 1 inside this transport chamber vertically and/or horizontally. This transport chamber may be a lifting chamber comprising a lift 92, 91. In some embodiments, such a transport chamber may be considered a part of the production line 10. In other embodiments it may not be considered part of the production line 10.

A hardware controller 96 comprising control circuitry may control the one or more motors 91, 93, the gate(s)/doors(s) 95 and/or the like based on timer input and/or sensor input in order to move a glass sheet assembly 1 into an unoccupied glass sheet assembly storage location 103 for preheating at station 100 chamber 101. It is hence understood that control circuitry of the controller 86 and/or a combination of controllers 96, 106, 206 may receive input from a monitoring arrangement (not illustrated), and thereby administrate the glass sheet assembly storage locations 103. The monitoring arrangement may comprise e.g. one or more sensors (not illustrated) such as one or more optical sensors, one or more proximity sensors, one or more cameras, and/or the like. Sensor data and/or other data is provided to one or more of the controller(s) 96, 106 and/or 206 and/or may be exchanged between the controllers 96, 106 and/or 206 so as to control the transport system 90, gate/door(s) 95, transport arrangements of the respective glass sheet assembly storage locations 103 (of present) and/or the like in order to assure a continuous supply of glass sheet assemblies 1 to be preheated in the chamber 101.

The hardware controller 106 may control the heater(s) 102 of the pre-heating station and/or control transport arrangements of the respective glass sheet assembly storage locations 103 and/or the like. This control of the heater(s) 102 may be based on input from one or more temperature sensors (not illustrated) and based on one or more predefined temperature thresholds in order to preheat the glass sheet assemblies 1 as desired.

In other embodiments of the present disclosure (not illustrated), the pre-heating station 100 may comprise a transport system 90 such as comprising a continuous belt, rollers and or the like for transporting the glass sheet assemblies 1. This/these assemblies 1 may be arranged inside a preheating chamber, e.g. an elongated chamber, and be arranged consecutively "in line" instead of being arranged in a stacked/rack preheating solution as illustrated in figs. 3 and 4. One or more heaters 102 may in this embodiment heat the glass sheet assemblies 1 as they gradually are moved forward towards the station 200. When a sufficiently pre-heated glass sheet assembly is moved into station 200, a new "cold" glass sheet assembly is moved into the pre-heating chamber while on or more further glass sheet assemblies 1 that is/are already present in the pre-heating chamber 10 is/are moved closer to the station 200.

In still further embodiments (not illustrated) the preheating chamber 101 itself may comprise a lift arrangement, e.g. by providing that the glass sheet assemblies may be moved inside the preheating chamber, e.g. moved vertically. This may be provided when loading a glass sheet assembly 1 into the preheating station and/or be provided in relation to loading the glass sheet assembly into the edge sealing station 200 chamber 201. In this embodiment, the glass sheet assembly storage locations 103 may be vertically movable in the chamber by means of a lifting system (not illustrated)

It is generally understood that in some embodiments of the present disclosure, the transport system 90, such as a transport system 90 described above according to different embodiments, may be operated as a buffer so that the glass sheet assembly 1 that has been in the pre-heating station for the longest time is moved into station 200 when this station is unoccupied. This may e.g. be referred to as a FIFO (First In, First Out) buffer. In other embodiments of the present disclosure, a sensor system may monitor the temperature of the individual glass sheet assembly and a controller 106 and/or 206 may pick a glass sheet assembly 1 for the station 200 from chamber 201 that complies with predetermined temperature criteria.

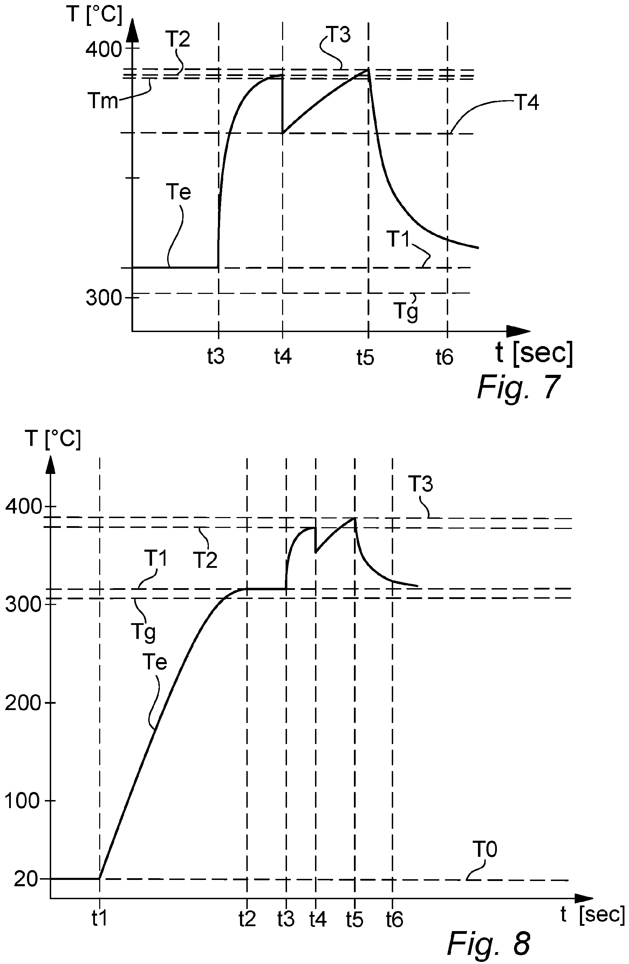

When a glass sheet assembly 1 has been sufficiently preheated (see e.g. temperature T1 in fig. 8) and the edge sealing station 200 is unoccupied /ready to receive a glass sheet assembly 1 to be processed in the edge sealing station 200, the preheated glass sheet assembly 1 is moved into the edge sealing chamber 201 of the edge sealing station 200. This may be provided by opening a second gate 105. A lift 210 in the edge sealing station may move a support 212 to the correct vertical level and received or picks the glass sheet assembly 1.

In some embodiments of the present disclosure, the lift 210 may then move vertically upwards or downwards to a predefined processing location, such as a predefined processing height, to obtain a desired distance to a heating arrangement 15 such as a laser arrangement 15. This may be advantageous in case the local heating is provided by means of e.g. one or more laser light beams. Providing the same distance to e.g. a mirror and/or lens arrangement of the heater may reduce need of calibration. The heating arrangement 15 may also be referred to as heater and may comprise or consist of an emitter.

In some embodiments, a sensor system, such as an optical sensor, may be used for determining the position of the solder material of the glass sheet in order to assure proper local heating.

The lift 210 may comprise a lifting system comprising a motor 211, such as an electric or pneumatic motor, for moving a support 212 which supports the glass sheet assembly to be processed.

It is generally understood that the support 212 may or may not comprise a transport arrangement (not illustrated). Such a transport arrangement may e.g. comprise one or more rollers, conveyer belt(s) and/or the like that may be used for movement of the glass sheet assembly 1 when moving the glass sheet assembly 1 from the station 100 and into station 200 and/or when moving the edge sealed glass sheet assembly 20 from the station 200 and into station 300. This transport arrangement may or may not support the glass sheet assembly 1 during the glass sheet assembly processing in the edge sealing station 200.

It is understood that in other embodiments of the present disclosure, the lift 210 of the edge sealing station may be omitted. For example in case the preheating station 100 is not a rack solution comprising vertically spaced apart glass sheet assembly storage locations 103 as illustrated in figs 3 and 4. E.g. as previously described where the glass sheet arrangements are arranged consecutively "in line" instead of being arranged in a stack/rack during preheating. In that case, the support 212 may be substantially fixed at e.g. a predefine distance to the heating arrangement 15. In this embodiment, the glass sheet assemblies may be loaded into the edge sealing chamber 201 of the edge sealing station 200 at the same vertical level each time from the pre-heating station 100 when the door/gate 105 is open.

In some embodiments, the lift 210 may be omitted and the glass sheet assemblies may be delivered to and/or moved from the support 212 at the same vertical level every time. This may e.g. be facilitated by providing a horizontal or vertical carousel solution at one or both stations 100, 300 or providing a horizontal or vertical carousel solution or another lift solution between the station 100 and station 200 and/or between the station 200 and station 300.

It is understood that in other embodiments of the present disclosure, if the preheating station 100 instead comprises a lift (not illustrated - see e.g. description above), the relevant glass sheet assembly may be moved vertically to a desired location (vertical level) inside the chamber 101, such as opposite to the support 212 in the edge sealing chamber 201, and then moved into that chamber 201 to rest on support 212.

At the edge sealing station 200, a heater 15 provides local heating of the solder material 7 of the glass sheet assembly 1. The local heating may in embodiments of the present disclosure comprise local heating by means of one or more heating beams 9, such as one or more laser light beams, as e.g. described in more details further below. In additional or alternative embodiments of the present disclosure, the local heating of the solder material may comprise local heating of the solder material 7 to soften it 7 by means of ultrasound and/or infrared radiation.

It is to be understood that the local heating of the solder material 7 is provided by the heater 15 so that the solder material 7 is heated and softened by the beam 9 from the heater 15, but that the majority of the area of the glass sheets 3, 4 arranged opposite to the gap 5 are not heated by the heater 15.

Hence, the heating beam(s) 9 is/are configured to provide heating directly at the area of the solder material 7 location, whereas heating by beam(s) 9 at other locations of the glass sheet assembly not arranged at or near the solder material 7 may be substantially omitted.

In some embodiments, the heating beam 9 may be selected so that the solder material 7 is heated by the heater 15 by absorbing the energy provided by the beam 9. The glass sheets 3, 4 may be substantially transparent to the heater 15 beam 9 energy. This may e.g. be provided/obtained by selecting a suitable wavelength of the beam 15, such as a laser wavelength and/or by selecting a suitable solder material 7 type able to absorb the energy, such as the majority of the energy, provided by the beam 9. Hence, the beam 9 may heat the solder material 7 through the glass sheet 3 or 4.

In some embodiments, the heating beam(s) 9 may be near-infrared or infrared heating beam(s).

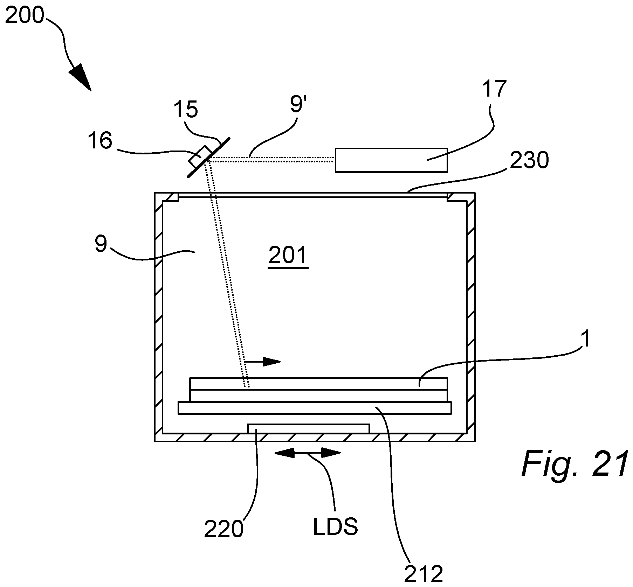

In some embodiments of the present disclosure, a laser light source, see e.g. also fig. 21, may provide the heating beam(s) 9. For example, a continuous wave laser or a pulsed laser. In some embodiments, the continuous wave laser or a pulsed laser may emit light in the near-infrared (NIR) or infrared (IR) wavelength range.

In some embodiments of the present disclosure, the heating beam(s) 9 may be a laser light beam in the wavelength range of between 750 nm-1.400 nm (0.75-1.4 µm). For example, the laser light source may provide laser light with a wavelength of about 1000-1100 nm, such as about 1040-1060 nm, for example substantially 1050 nm.

In some embodiments of the present disclosure, the heating beam(s) 9 may be a laser light beam in the wavelength range of between 750 nm-15.000 nm (0.75-15 µm).

In the following, the local heating of the solder material 7 is described as being provided by means of a laser light beam 9. However, it is understood that other suitable heating solutions for local heating and softening of the solder material 7 to soften it 7 may additionally or alternatively be provided. It is understood that the laser light beam may be controllable/ steerable by a mirror arrangement (not illustrated) so as to move the laser light beam 9 along the longitudinal direction of one or more solder material 7 strip(s), e.g. at a speed providing an even heating and softening of the entire edge seal solder material 7 of the glass sheet assembly. The mirror arrangement may in some embodiments comprise one or more laser beam steering mirrors (see e.g. also fig. 22), for example comprising Piezo Tip/Tilt Platforms and /or Controllers. The mirror arrangement may be selected according to one or more of laser beam adjustment speed performance, precision, laser type compatibility and/or tilting angle performance. In some embodiments, the heater may comprise one or more lenses. In some embodiments, the heater may comprise one or more lenses for adjusting the laser light spot size subjected to the solder material 7.

In some embodiments of the present disclosure, the mirror / mirror arrangement (see also fig. 21) may be considered an emitter acting as a heater or a part of a heater. In this case the mirror directs/emits the laser light beam from a laser light source towards the solder material.

The local heating of the solder material 7 may e.g. be provided by moving one or more laser light beams 9 fast along the solder material 7 for a plurality of consecutive heating iterations as e.g. described in more details below.

When the solder material 7 has been heated locally to a desired/predetermined temperature (see e.g. T2 of figs. 7 and/or 8), and thereby a suitable softness, a pressure difference between the pressure in the gap 5 of the glass sheet assembly 1 and the pressure surrounding the glass sheet assembly 1 in the edge sealing chamber 201 is provided. The pressure difference provides that the first glass sheet 3 and the second glass sheet 4 are forced towards each other and thereby squeezes/clamps and deforms the softened solder material 7. This may also be referred to as force clamping. This may help to provide an enhanced edge sealing of the glass sheet assembly 20 and final VIG unit 30.

The pressure difference is maintained for a time period (See time t4-t5 of figs. 7 and/or 8) while continuous local heating is provided by moving the laser beam(s) 9 along the length of the solder material 7 to heat it 7, preferably in a plurality of heating iterations.

The local solder material 7 heating prior to providing the pressure difference may help to provide that the solder material is softened more than it was when the glass sheet assembly had been subjected to merely the preheating.

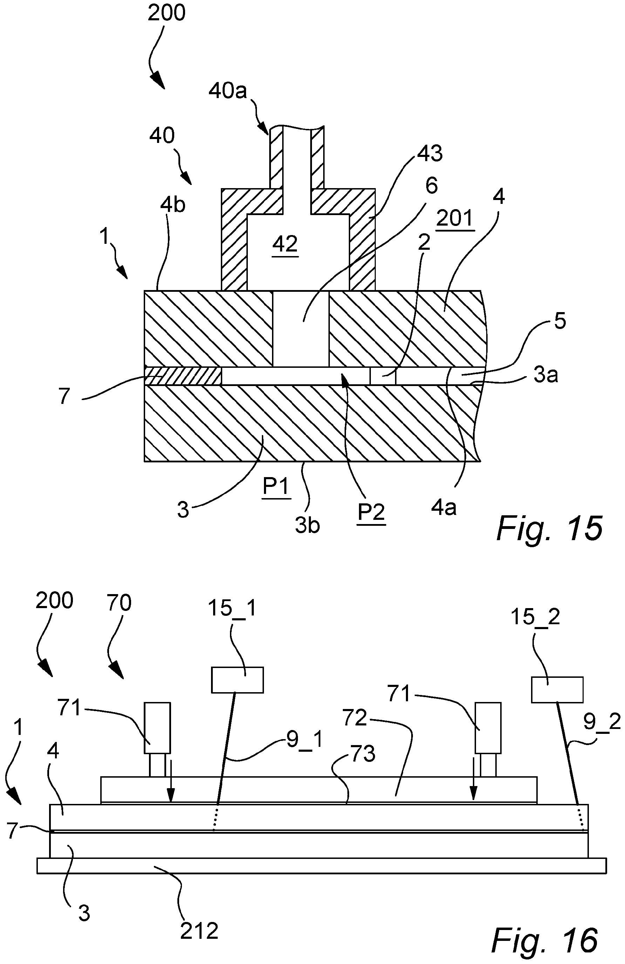

The pressure difference provides a force clamping of the solder material 7. It is understood that in other embodiments, the force clamping may be provided by means of other clamping solutions, e.g. comprising one or more actuators and/or clips. If there is a desire of omitting clips distributed around the glass sheet assembly for providing the force clamping, the pressure difference as described above and/or below, and/or an actuator solution, may be used, see e.g. fig. 16.

The glass sheets 3, 4 may generally e.g. maintain the temperature from the preheating step in the edge sealing chamber 201 (e.g. by means of one or more heaters such as convection heater(s) - not illustrated) or may be allowed to gradually reduce glass sheet temperature 3, 4 during the local heating of the solder material 7 in the sealing chamber 201. Generally, it is understood that in some embodiments, active heating, such as convection heating, of the edge sealing chamber 201 may be provided. In other embodiments, active heating, such as convection heating, of the edge sealing chamber 201 may be omitted.

The heating of the solder material 7 by means of the one or more laser beams 9 by moving the one or more laser beams 9 in a plurality of heating iterations along the solder material 7 provides that a substantially even, gradual heating and softening of the entire solder material 7 of solder material 8 stripes A-B, B-C, C-D and D-A of the glass sheet assembly 1 is obtained. Hence this may in embodiments of the present disclosure enable providing a pressure difference in order to obtain that the glass sheets 3, 4 clamps the softened solder material 7. This may also be referred to as force clamping in the present document. Thus, in some embodiments of the present disclosure, no external, mechanical clamping means, such as e.g. clips, may be needed to provide a desired clamping force on the heated and softened solder material 7.

The force clamping, such as the pressure difference, may be temporary and may be stopped, such as eliminated, again after sufficient heating of the solder material 7 has been obtained by the one or more heating beams at the edge sealing station 200.

In fig. 3, the pressure difference between the pressure in the gap 5 of the glass sheet assembly 1 and the pressure P1 surrounding the glass sheet assembly 1 in the edge sealing chamber 201 is provided by means of an evacuation cup 40 arranged to cover an evacuation hole (see ref. 6 of figs. 1 and 2). An evacuation pump 8 is in fluid communication with an internal/inner cavity of the evacuation cup 40. The evacuation pump 8 thereby provides a reduced pressure in the gap 5 in order to obtain the pressure difference. This negative pressure may not be as great/large as the final negative pressure to be provided in the gap 5 of the final VIG unit 30. The pressure difference provided at edge sealing station 200 may merely be temporary and be provided in order to obtain a desired clamping force acting on the softened solder material 7.

The pressure difference between the pressure in the gap 5 and the pressure P1 surrounding the glass sheet assembly unit at the edge sealing station 200 chamber 201 may in some embodiments of the present disclosure be at least 0.2 bar, such as at least 0.5 bar, such as at least 0.7 bar, such as at least 0.8 bar.

The pressure difference between the pressure in the gap 5 and the pressure P1 surrounding the glass sheet assembly 1 at the edge sealing station 200 chamber 201 may in some embodiments of the present disclosure be at least 0.9 bar, such as at least 0.99 bar, such as at least 0.999 bar.

The pressure difference between the pressure in the gap 5 and the pressure P1 surrounding the glass sheet assembly 1 at the edge sealing station 200 chamber 201 may in some embodiments of the present disclosure be between 0.2 bar and 0.99999 bar, such as between 0.5 bar and 0.9999 bar, such as between such as between 0.99 bar and 0.9999 bar.

The pressure difference between the pressure in the gap 5 and the pressure P1 surrounding the glass sheet assembly 1 at the edge sealing station 200 chamber 201 may in some embodiments of the present disclosure be at least 0.5 bar.

The pressure in the gap 5, during the providing of the pressure difference between the gap 5 and the pressure P1 surrounding the glass sheet assembly 1 at the edge sealing station 200 chamber 201, may in some embodiments of the present disclosure be below 0.5 bar, such as below 0.1 bar such as below 0.01 or below 0.001 bar. This may e.g. be obtained by gap 5 evacuation.

The pressure in the gap 5, during the providing of the pressure difference between the gap 5 and the pressure P1 surrounding the glass sheet assembly 1 at the edge sealing station 200 chamber 201, may in some embodiments of the present disclosure be above 0.005 mbar such as above 0.05 mbar, such as above 0.05 bar.

The pressure difference between the pressure in the gap 5 and the pressure P1 surrounding the glass sheet assembly unit may be obtained within 10 seconds, such as within 5 seconds, such as within 3 seconds or within 2 seconds.

The pressure in the gap 5, during the providing of the pressure difference between the gap 5 and the pressure P1 surrounding the glass sheet assembly 1 at the edge sealing station 200 chamber 201, may in some embodiments of the present disclosure be between 0.005 mbar and 0.5 bar, such as between 0.5 mbar, and 0.1 bar.

The pressure difference between the pressure in the gap 5 and the pressure P1 surrounding the glass sheet assembly 1 at the edge sealing station 200 chamber 201 may in some embodiments of the present disclosure be less than 0.8 bar such as less than 0.5 bar. The pressure difference between the pressure in the gap 5 and the pressure P1 surrounding the glass sheet assembly at the edge sealing station 200 chamber 201 may however in other embodiments of the present disclosure be at least 0.8 bar such as at least 0.9 bar or at least 0.99 bar.

It is generally understood that in some embodiments of the present disclosure, the pressure difference between the pressure in the gap 5 and the pressure P1 surrounding the glass sheet assembly 1 at the edge sealing station 200 may be obtained by evacuating the gap 5, e.g. by means of an evacuation cup /suction cup 40. In other embodiments of the present disclosure, it may be obtained by temporarily sealing off the gap 5 and providing a higher pressure/overpressure in the edge sealing chamber 201. The pressure difference provides a clamping of the solder material 7 which may help to provide an improved edge sealing connection and/or help to compress and deform the solder material 7.

It is understood that the pressure difference between the pressure in the gap 5 and the pressure P1 surrounding the glass sheet assembly unit at the edge sealing station 200 chamber 201 may in some embodiments of the present disclosure gradually continue to increase during substantially the entire process of locally heating the solder material 7 by means of e.g. one or more laser beams. In other embodiments, the pressure difference is set to a predetermined value and may be controlled to not increase further when this value, such as a predetermined pressure value, is reached.

In some embodiments of the present disclosure, regulation circuitry and/or one or more hardware controllers may control the pressure in the gap 5 and/or the pressure in the edge sealing station 200 chamber 201 during the local heating of the solder material by means of e.g. one or more heating beams 9 such as one or more laser beams. The regulation circuitry and/or one or more hardware controllers may be configured to adjust the pressure in the gap 5 and/or the pressure in the edge sealing station 200 chamber 201 during the local heating of the solder material according to a predefined control scheme. This may e.g. be controlled based on one or more feedback loops such as e.g. relating to the pressure in the gap and/or the pressure in the edge sealing chamber 201, for example based on sensor input.

In fig. 3, the pressure difference between the pressure in the gap 5 and the pressure P1 surrounding the glass sheet assembly 1 is provided by evacuating the gap 5. e.g. by means of an evacuation cup 40. In the embodiment of fig. 4, a pump 8 instead provides the pressure difference between the pressure in the gap 5 and the pressure P1 surrounding the glass sheet assembly 1 by providing an overpressure P1 in the chamber 201 relative to the pressure in the gap 5 so as to obtain a pressure difference in order to clamp the solder material 7 by means of the glass sheets 3, 4. In the embodiment of fig. 4, an evacuation hole 6 at the glass sheet assembly 1 may hence be temporarily sealed to allow creating an over pressure in the chamber 201 relative to the pressure in the gap 5.

When, or after, the solder material 7 has been finally heated to a desired temperature (See e.g. T3 of figs. 7 and/or 8), the temporary pressure difference between the pressure in the gap 5 and the pressure P1 surrounding the glass sheet assembly 1 is eliminated. E.g. by shutting off the evacuation pump 8 or opening or closing a valve. This release of the pressure difference may in some embodiments be provided at a time after the heating by means of the one or more heating beams is stopped.

Then the glass sheet assembly 20 is moved to the evacuation station 300 for final evacuation and sealing of the gap 5. It is understood that reference "20" represents the glass sheet assembly after it has been processed in the edge sealing station 200 and prior to that the gap 5 has been finally evacuated and sealed to obtain a VIG unit 30 at the evacuation station 300.

The edge sealed glass sheet assembly 20 is moved from the edge sealing compartment/chamber 201 and into the evacuation station 300 chamber 301. This movement of the assembly 30 may be provided by vertically lifting or lowering the glass sheet assembly 20 by means of the lift 210 and horizontally displacing/moving it into the chamber 301 to a storage location 303, e.g. by means of a transport arrangement (not illustrated) of the support 212 as e.g. previously described.

An alternative solution may comprise that storage location(s) 303 may be arranged in/as part of a carousel conveyer such as a vertical carousel conveyer or a horizontal carousel conveyer of the station 100 and/or 300. This may e.g. enable omitting the lift 210.

A gate or door 205 may be opened to allow moving the edge sealed glass sheet assembly 20 into the compartment/chamber 301 and may thereafter be closed again.

The evacuation station 300 may comprise a plurality of storage locations 303 for storing edge sealed glass sheet assemblies 20 during evacuation of the gap 5. This may e.g. be provided in substantially the same way as loading glass sheet assemblies 1 into the preheating compartment 101 and/or unloading glass sheet assemblies from the preheating compartment/chamber 101 and into the edge sealing station. Hence,

The glass sheet assembly storage locations 303, such as a support 312 thereof, of the station 300 may (e.g. each) may comprise a shelve, rail, one or more conveyers such as rollers 313 (see fig. 3a) and/or belts, and/or the like. Each storage location may be arranged above each other, e.g. in a rack arrangement, and/or besides each other.

In some embodiments of the present disclosure, more than one, such as more than two, such as more than five or more than ten glass sheet assembly storage locations 303 may be provided in the evacuation station. In some embodiments, between one and fifty, such as between two and forty, for example between five and twenty glass sheet assembly storage locations 303 (Both end points included) may be provided in the evacuation chamber 301. In figs. 4 and 3, the evacuation chamber/compartment 301 comprises seven glass sheet assembly storage locations 103 that are vertically displaced above each other and which each is configured to receive and store one or more edge sealed glass sheet assembly 20, such as at least one edge sealed glass sheet assembly 20, for example at least two glass sheet assemblies 20, during evacuation and sealing of the gap 5 of the respective edge sealed assembly 20.

An evacuation pump 308 (e.g. separate to the pump 8 used in station 200) evacuates the gap 5. This may as illustrated, in some embodiments, be provided by means of an evacuation cup 41 assigned each storage location 303 (only one cup 41 is referred to in fig. 3 and 4 for figure simplicity), and a relative movement between evacuation cup and the assembly 20 may in some embodiments be provided in order to obtain contact, such as substantially hermetic contact, between the cup 41 and the respective assembly 20 before gap evacuation 5. The cup(s) 41 is/are in fluid communication with the evacuation pump 308.

In some embodiments, a valve system (not illustrated) may be controlled to shut on and off a fluid communication between the respective cup 41 and a pump 308 in order to e.g. enable one pump 308 to evacuate a plurality of assemblies 20.

In still further embodiments, several pumps 308 may be provided, where one or more of these pumps 308 each evacuates one or more assembly 20 gaps 5.

In another or additional embodiments of the present disclosure (not illustrated), the entire chamber 301 may be an evacuation chamber, and a plurality of gaps of different assemblies 20 may be evacuated by evacuating the evacuation station 300 chamber 301.

In the embodiments of fig. 3 and 4, the cup(s) 41 may comprise a heater (not illustrated) to be activated for heating an evacuation hole 6 sealing 6a solution in order to seal the gap 5 when the gap 5 has been sufficiently evacuated by the pump 308.

In some embodiments of the present disclosure, the pump 308 may evacuate the gap 5 to a pressure below 0.05 mbar, such as below 0.005 mbar, such as below 0.003 mbar or below 0.001 mbar, before sealing to maintain that obtained gap 5 pressure. This may be considered a substantially vacuum.

In some embodiments of the present disclosure the maximum pressure difference between the pressure in the gap 5 and the pressure P1 surrounding the glass sheet assembly 1 at the edge sealing station 200 (if the force clamping is provided by means of the pressure difference as e.g. previously explained, for example by temporary gap 5 evacuation) may be smaller than the pressure difference between the pressure in the gap 5 and the pressure surrounding the edge sealed glass sheet assembly 20, i.e. the VIG unit 30, at the evacuation station 300 after said (permanent) sealing off 6a the gap 5 from the surroundings.

In some embodiments of the present disclosure, the maximum pressure difference between the pressure in the gap 5 and the pressure P1 surrounding the glass sheet assembly 1 at the edge sealing station 200 may be at least ten times less, such as at least 100 times less, than the pressure difference between the pressure in the gap 5 and the pressure surrounding the edge sealed glass sheet assembly 20 at the evacuation station 300 after said (permanent) sealing off 6a of the gap 5 from the surroundings.

A sufficient pressure difference provided by a pump 8 for force clamping purpose at the edge sealing station 200 may e.g. be obtained faster when compared to the time it takes to provide the final, low gap 5 pressure obtained at the evacuation station 300 by pump(s) 308 prior to final (permanent) sealing by a gap sealing 6a to obtain the VIG unit 30.

The evacuation and sealing of the gap 5 in the station 300 may take a longer time than the local heating and edge sealing of station 200. For example, the evacuation and sealing of the gap 5 in the station 300 may take at least twice as long, e.g. at least five times as long, for example at least ten or at least twenty times as long as the time it takes (see time t3 to t5 of figs 7 and 8) from the start (see time t3 of fig. 7 and/or 8) of locally softening the solder material 7, providing the force clamping, e.g. by pressure difference (see time t4 of figs 7 and/or 8) and eliminating the pressure difference again (see t5 of figs. 7 and/or 8) in the edge sealing station 200 as e.g. described above and/or in more details below.

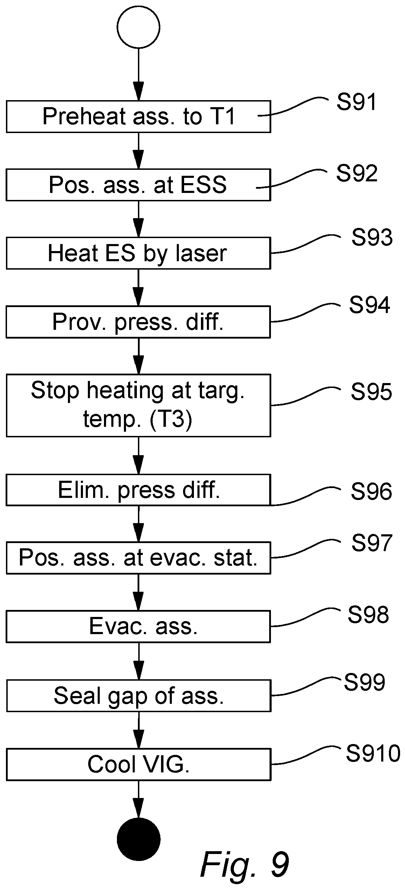

In some embodiments of the present disclosure, a heating arrangement 302, such as a convection heating arrangement, may heat the assemblies 20 in the evacuation chamber 301 during the evacuation of the gap 5. This may e.g. be provided to a temperature above 150 °C, such as above 200 °C, e.g. above 300 °C. In some embodiments, the heating arrangement 302 may heat the assemblies 20 in the chamber 301 to a temperature below the glass transition temperature Tg of the edge sealing material 7. In some embodiments, the heating arrangement 302 may heat the assemblies 20 in the chamber 301 to a temperature below 305°C. Embodiments of the temperature in the chamber 301 are moreover described below in relation to fig. 9.

In some embodiments of the present disclosure, the evacuation of the gap 5 at the evacuation station 300 may be provided for at least 5 minutes, such as at least 10 minutes, for example at least 20 minutes or at least 25 minutes.

In some embodiments of the present disclosure, the evacuation of the gap 5 at the evacuation station 300 may be provided for less than 60 minutes, such as less than 40 minutes, for example less than 30 minutes.

In some embodiments of the present disclosure, the evacuation of the gap 5 at the evacuation station 300 may be provided for between 5 minutes and 60 minutes, such as between 10 minutes and 40 minutes, for example between 15 minutes and 30 minutes. In certain embodiments of the present disclosure, the evacuation of the gap 5 may be provided for between 10 minutes and 30 minutes.

After the gap 5 has been evacuated and sealed, such as permanently sealed, at station 300, e.g. by means of melting a solder material and/or a glass component such as a glass tube so as to seal the gap 5, the assembly 20 has been turned into a VIG unit 30.

The VIG unit 30 is transported from the evacuation station 300 (e.g. through a gate or door 305) and to a cooling location or cooling arrangement (not illustrated), e.g. by means of a transportation system 400. This transportation system 400 may or may not comprise a lift for collecting the VIG units 30 from the evacuation station 300 when finished. E.g. as previously explained in relation to e.g. the transportation system 90.

In some embodiments (not illustrated) a buffer station may be placed between edge sealing station 200 and the evacuation station. This buffer station may receive assemblies 20 and the assemblies 20 may be moved into the evacuation chamber 301 when desired. In some embodiments hereof, said buffer station may comprise a lift or the like (e.g. as the lift 210 described above). This may e.g. be relevant if the preheating station 200 neither comprises a plurality of vertically displaced assembly storage locations 103, since the support 212 may then neither be vertically displaceable by a lift 210.

Hence, in some embodiments, the station 300 may comprise a plurality of vertically displaced assembly 20 storage locations 303, whereas the preheating station may not comprise a plurality of vertically displaced assembly 20 storage locations 303 (as e.g. previously described if an "in line" preheating solution is used).

It is generally understood that one, more or all of the doors/gates 95, 105, 205, 305 may comprise one or more gates/doors e.g. assigned each individual vertical level of the preheating station, or it may be a common gate. The gate/door may be openable and closeable by controlling one or more actuators such as one or more motors and/or one or more linear actuators.

It is understood that one or more of the stations 100, 200, 300 compartments 101, 201 and/or 301 may be surrounded/enclosed by heat insulating outer walls. In some embodiments the doors/gates 95, 105, 205, 305 may or may not be heat insulated. These walls may be separate to walls of a building in which the production line 10 is arranged.

It is generally understood that the production line 10 may be embodied as, or in a single device or apparatus comprising different consecutive stations 100, 200 300, or may be embodied as, or in separate devices, such as separate stations.

For example, in some embodiments of the present disclosure, the storage location(s) 303 and/or 103 may be arranged in/as part of, a carousel conveyer such as a vertical carousel conveyer or a horizontal carousel conveyer of the station 100 and/or 300.

Fig. 3a illustrates schematically an embodiment of the present disclosure, where more than one (in this case two) evacuation pumps 308 are dedicated one evacuation cup and are in direct or indirect fluid communication with an inner cavity of the cup 41 at station 300. Hence, a first and a second pump 308 may be provided for each storage location 303. This may provide that the number of evacuation pumps 308 assigned station 300 equals the double of the number of storage locations 303 at station 300. For example so that e.g. twenty storage locations 303 at station 300 results in forty evacuation pumps. Hence, when an assembly 20 gap 5 is evacuated at station 300 by a pump 308, a first pump may provide an initial gap 5 evacuation, and a further pump may then at the same time or at a later stage be started in order obtain the final, desired gap 5 evacuation before gap 5 sealing to obtain the VIG unit. In fig. 3a, the pumps are connected in series. In other embodiments, they may be connected in parallel.

Fig. 3a moreover schematically illustrates an embodiment of the present disclosure where the glass sheet assembly 20 support 312 of the storage location 303 comprises a conveyer such as a roller solution. Here, a plurality of rollers 313, such as passive rollers or active rollers driven directly or indirectly by one or more motors, are configured to transport the edge sealed glass sheet assembly to and from the station 300 chamber 301. Additionally, the conveyer 313 may support the glass sheet assembly during the gap evacuation 5 and sealing. In other embodiments, the glass sheet assembly 20 may support on another support during the gap 5 evacuation and sealing.

It is understood that the support 112, 312 of the stations 100, 300, in some embodiments of the present disclosure, may be substantially of the same type.

It is generally understood that each station 100, 200 and 300 of the production line 10, and possibly also transport systems and the like, in various embodiments of the present disclosure, may comprise one or more hardware controllers 96, CTR comprising one or more microprocessors which execute appropriate software stored in a data storage in order to handle/control one, more than one, or all of the station 100, 200, 300 related features of that respective station 100, 200, 300 such as controlling:
- Preheating at station 100,
- Temperature maintenance at station 100 and/or 200,
- local solder material 7 heating by one or more heating beams at station 200,
- transport to, between and/or from the respective station 100, 200, 300,
- providing pressure force clamping such as pressure difference, e.g. by gap 5 evacuation at station 200,
- gap 5 evacuation and gap sealing at station 300
- and/or the like.

In other or further embodiments, a central hardware controller CTR may be configured to control one, more than one, or all of the above mentioned of two or more stations 100, 200, 300. In some embodiments, a transport controller may be dedicated for controlling the transport to, from and/or between the stations 100, 200, 300.

In some embodiments of the present disclosure, the controller or controllers, for example a controller subsystem and/or a processor subsystem, may be embodied by a single Central Processing Unit (CPU), but also by a combination or system of such CPUs and /or other types of processing units may be provided. The software to be executed may have been downloaded and/or stored in a memory, e.g. a volatile memory such as RAM or a nonvolatile memory such as Flash. Additionally or alternatively, the processor or processors may be implemented in a device or apparatus, such as in a controller, in the form of programmable logic, e.g., as a Field Programmable Gate Array (FPGA), a programmable Logic Controller (PLC) and/or the like. In general, each functional unit of the control system may be implemented in the form of a circuit. In some embodiments, the control system for controlling the production line 10 may hence comprise a central controller and/or a plurality of distributed sub-system controllers assigned one or more of the respective station(s) 100, 200, 300.

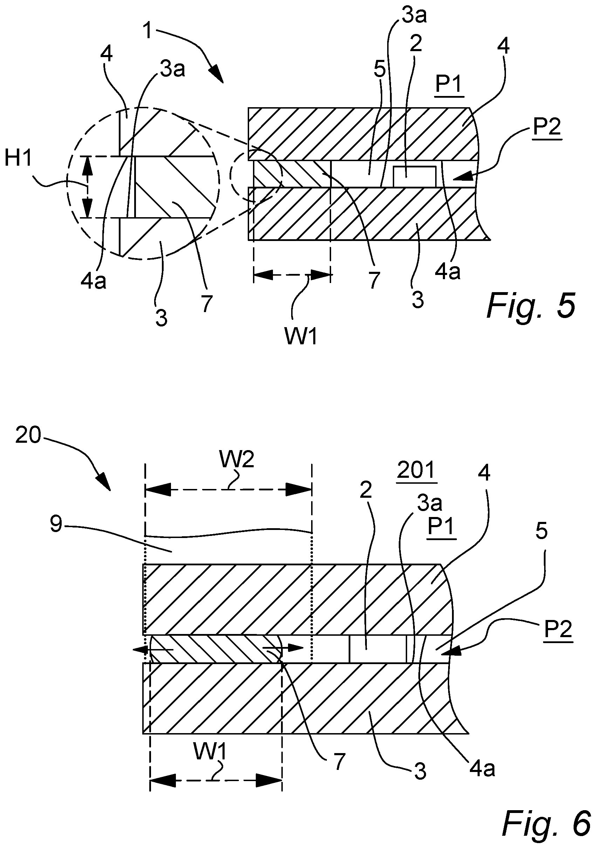

Fig. 5 illustrates schematically a cross section of a glass sheet assembly 1 according to embodiments of the present disclosure, prior to providing the assembly 1 processing at edge sealing station 200. The cross section is seen in a plane that is perpendicular to the glass longitudinal direction of the solder material strip 7. In fig 5, the solder material 7 has a height H1 (before the processing in the edge sealing station 200) that is larger than the height of the support structures 2. A plurality of the support structures 2 may hence not be in contact with the upper glass sheet 3 before the final gap 5 evacuation to provide the VIG unit 30.

In fig. 5, the pressure P2 in the gap 5 and the ambient pressure P1 surrounding the assembly 1 are substantially equal.

The solder material 7 strip width W1 before the processing in the edge sealing station 200 may be between 2 mm and 8 mm, such as between 3 mm and 6 mm, for example between 4 mm and 5 mm (both end points included). This is the case before introducing the assembly 1 to the preheating station and this width W1 may substantially be maintained also after assembly 1 preheating at station 100, but before evacuation at the edge sealing station 200.

Fig. 6 illustrates schematically and in cross section an embodiment of the present disclosure when the solder material 7 is locally heated at the edge sealing station 200. Local heating by beam 9 has been provided substantially uniformly around the entire edge seal solder material of the assembly, e.g. during a plurality of heating iterations, and this has softened the solder material 7 further when compared to the softness of the solder material 7 after/at the end of the preheating and prior to the local heating at station 200.

When the solder material 7 has been sufficiently heated (see temperature T2 of figs 7-8), the pressure difference between the pressure P2 in the gap 5 of the glass sheet assembly 1 and the pressure P1 surrounding the glass sheet assembly 1 in the edge sealing chamber 201 is provided. This pressure difference provides that the glass sheets 3, 4 clamps and deforms the solder material 7 thereby reducing the height H1 of the solder material 7 and increasing the width W1 of the solder material 7. The height H1 of the solder material may in some embodiments be reduced to substantially height H2 as e.g. previously described. In some embodiments, the support structures 2 may at least partly help to limit the solder material height H1 reduction.

The solder material 7 width W1 may, during the processing at the edge sealing station 200, in embodiments of the present disclosure, be increased with at least 10%, such as at least 20% or at least 40% when compared to the initial solder material width W1 before the local heating and temporary evacuation of the gap 5 at the edge sealing station 200. This width may substantially be maintained after releasing/eliminating the pressure difference.

The solder material 7 width W1 may, due to the processing at the edge sealing station 200, in embodiments of the present disclosure, be deformed to have a final solder material width W1 of between 4 mm and 16 mm, such as between 5 mm and 11 mm, for example between 7 mm and 9 mm.

The solder material 7 width W1 may in embodiments of the present disclosure be increased with at least 10%, such as at least 20% or at least 40% when compared to the initial solder material width W1 before the local heating and temporary evacuation of the gap 5 at the edge sealing station 200.

The solder material 7 height W1 may in embodiments of the present disclosure be decreased with at least 10%, such as at least 20% or at least 40% when compared to the initial solder material height H1 before the local heating and temporary evacuation of the gap 5 at the edge sealing station 200.

When the pressure difference between the pressure P2 in the gap 5 and the pressure P1 surrounding the glass sheet assembly has been eliminated, the increased width W1 and decreased height H1 is substantially maintained, and more support structures 2 may possibly touch both the glass sheet surfaces 3a, 4a.

The beam 9 providing the local heating of the edge sealing material/solder material 7 may in embodiments of the present disclosure have a spot size W2 (e.g. spot width or spot diameter) that is at least 10%, such as at least 20%, such as at least 30% larger than the width W1 of the solder material 7 strip. In some embodiments of the present disclosure, the beam 9 providing the local heating of the edge sealing material/solder material 7 may have a spot size W2 (e.g. spot width or spot diameter) that is at least 50%, such as at least 90% larger than the width W1 of the solder material 7 strip.

The light intensity of a laser light beam has a gaussian distribution and the spot diameter W2 of the laser light beam can be defined in at least three different manners. Herein, the definition named 1/e2 is employed, where the edge of the spot is defined as the position, where the irradiance is 13.5% of its maximal value in the cross-section of the beam.

For example, in some embodiments of the present disclosure, the beam 9 providing the local heating of the edge sealing material/solder material 7 may in embodiments of the present disclosure have a spot size W2 (e.g. spot width or spot diameter) that is between 10% and 150% larger, such as between 30% and 100% larger, for example between 40% and 80% larger, than the width W1 of the solder material 7 strip. The above mentioned spot size W2 embodiments may be the spot size W2 relative to the solder material 7 strip width W1 when the glass sheet assembly 1 has been positioned at the edge sealing station 200 and the heating of the solder material by means of the one or more beams 9 is initiated (e.g. substantially at time t3 - see figs. 7 or 8). Additionally or alternatively, the above mentioned spot size W2 embodiments may be the spot size W2 relative to the solder material 7 strip width W1 strip(s) before or substantially at initiation (see e.g. time t4 mentioned above in relation to figs 7 or 8) of the temporary force clamping of the solder material 7 by means of the glass sheets 3, 4, e.g. by means of the pressure difference as previously described, for example by the previously mentioned temporary evacuation of the gap 5 at the edge sealing station 200 by an evacuation pump 8. Other solutions for providing a force clamping is/are explained below, e.g. in relation to fig. 16. Other embodiments of the spot size width W2 and/or control of the heating of the solder material by one or more heating beams 9 are described in relation to one or more of e.g. figs. 10-14 and/or figs. 17a-20 below.

Fig. 7 illustrates schematically a temperature graph relating to the processing of a glass sheet assembly 1 at an edge sealing station 200, such as e.g. the station 200 of fig. 3-4, according to embodiments of the present disclosure, from a time t3 to t5. The temperature graph Te illustrates the temperature of the solder material 7 during the processing at the/an edge sealing station 200.

At time t3, the local heating by e.g. means of laser of a heating arrangement 15 is started to heat the solder material. This comprises a plurality of consecutive and preferably continuous heating iterations along the solder material 7 so as to heat the solder material 7. This is provided with a heating energy and a movement speed that assures substantially equal heating of the entire edge seal material. For example in order to assure substantially the same temperature, and thereby substantially the same viscosity, of all of the solder material 7 of the assembly when the pressure difference is initiated at station 200 at time t4.

From time t3-t4 an initial, local heating of the edge seal materials provided by the one or more heaters at station 200, thereby softening the solder material 7 further when compared to the hardness of the solder material prior to the local heating of the solder material.

Prior to providing the pressure difference between the pressure in the gap 5 of the glass sheet assembly 1 and the pressure surrounding the glass sheet assembly 1 in the edge sealing chamber 201 at time t4, the solder material 7 may, in embodiments of the present disclosure, be locally heated by one or more heaters 15 at the edge sealing station to a solder material temperature Te in the range of 20 to 100 °C, preferably in the range of 40 to 90 °C, such as in the range of 40 to 90 °C above the temperature T1 of the solder material 7 at the time t3 when the local heating by one or more heaters is initiated at the station 200. Hence, T2 - T1 (T2 minus T1) may correspond to a temperature difference in the above-mentioned range. This may be provided in the time period t3-t4.

In some embodiments of the present disclosure, prior to providing the pressure difference between the pressure in the gap 5 of the glass sheet assembly 1 and the pressure surrounding the glass sheet assembly 1 in the edge sealing chamber 201 at time t4, the solder material 7 may be locally heated (see t3-t4) by one or more heaters 15 at the edge sealing station to a solder material temperature Te in the range of 20 to 120 °C, preferably in the range of 40 to 110 °C, such as in the range of 60 to 90 °C above the glass transition temperature Tg of the solder material 7.

The heating provided from time t3 to time t4 may be considered an initial local heating (and thereby softening) of the solder material 7. This may e.g. help to provide that an improved contact and/or a more airtight connection between the glass sheets 4, 5 and the solder material is obtained prior to providing the pressure difference.

The local heating of the solder material 7 provides that the temperature Te of the solder material 7 is elevated when compared to the general temperature, such as average temperature, of the glass sheets 3, 4 when the glass sheet assembly entered the edge sealing station.

At time t4, the providing of the pressure difference between the pressure in the gap 5 of the glass sheet assembly 1 and the pressure surrounding the glass sheet assembly 1 is initiated. This causes an improved contact between the solder material 7 and the glass sheets as the glass sheets 3, 4 hereby clamps the solder material 7. As can be seen from fig. 7, the temperature Te of the solder material 7 drops to a reduced temperature T4 (when compared to T2) when initially providing the pressure difference, as the glass sheets 3, 4 acts as heat sinks. The local heating is however continued while the pressure difference between the pressure in the gap 5 of the glass sheet assembly 1 and the pressure surrounding the glass sheet assembly 1 is maintained. This causes the solder material 7 temperature to increase again until an elevated solder material 7 target temperature T3 is reached at time t5.

At time t5, the local heating of the solder material 7 is stopped. Stopping the local heating of the solder material 7 causes the temperature of the solder material 7 to drop, as the glass sheets 3, 4 are colder than the solder material 7 and hence acts as heat sinks to cool the solder material 7. In some embodiments, the pressure difference may be maintained after stopping the local heating, and the pressure difference may hence first be eliminated at a later point t6 after the local heating was stopped t5.

The average temperature of the glass sheets 3, 4 of the glass sheet assembly 1 may in in embodiments of the present disclosure be lower than the maximum target heating temperature T3 of the solder material 7 while the local heating of the solder material 7 is provided at the station 200. This may help to provide a cooling and hardening of the solder material 7 after the local heating is stopped (see t5) as the glass sheets 3, 4 may act as heat sinks.

A glass sheet assembly heater 220, such as a convection heater, may assure that the chamber 201 is heated to a desired temperature during the local heating of the solder material 7.

The temperature in the chamber 201 may in some embodiments be determined/set based on e.g. the preheating target temperature T1.

In some embodiments, the same heater may provide the heating of both chambers 101, 201. In other embodiments an individual heater 102, 220 may be provided for each chamber 101, 201 as indicated in figs 3 and 4.

The average temperature of the glass sheets 3, 4 may, during the locally heating at time t3-t5, in embodiments of the present disclosure, at the edge sealing station 200 chamber 201, be maintained within ± 30 °C, such as within ± 20 °C, such as within ± 10 °C or within ± 5 °C of the temperature that they 3, 4 had when entering the edge sealing station chamber 201. This may be provided by means of the glass sheet assembly heater 220.

In some embodiments, the average temperature of the glass sheets 3, 4 may, at the edge sealing station chamber 201, be maintained within ± 30 °C, such as within ± 20 °C, such as within ± 10 °C or within ± 5 °C of a preheating target temperature T1 (see fig. 8). This may be provided by means of the glass sheet assembly heater 220.

In some embodiments of the present disclosure, the average temperature of the glass sheets 3, 4 of the glass sheet assembly 1 may be at least 20 °C lower, such as at least 50 °C lower, for example at least 60 °C lower or at least 70 °C lower, than the maximum heating temperature T3 of the solder material 7 while the local heating of the solder material 7 is provided at the station 200.

In some embodiments of the present disclosure, the average temperature of the glass sheets 3, 4 of the glass sheet assembly 1 may be between 20 °C and 150 °C lower, such as between 30 °C and 100 °C lower, for example between 40 °C and 80 °C lower, than the maximum heating temperature T3 of the solder material 7 while the local heating of the solder material 7 is provided at the station 200.

In some embodiments of the present disclosure, the average temperature of the glass sheets 3, 4 of the glass sheet assembly 1 may be at least 5% lower, such as at least 10% lower, for example at least 15% lower, than the maximum heating temperature T3 of the solder material while the local heating of the solder material 7 is provided at the station 200.

The average temperature of the glass sheets 3, 4 of the glass sheet assembly 1 may be determined by providing plurality, such as at least 50, at least 200 or at least 400 temperature measurements of the glass sheet temperature and based thereon determine an average temperature of the glass sheet temperature. The temperature measurement points may be substantially evenly distributed over the area of the major surface of the glass sheet.

In some embodiments of the present disclosure, the average temperature of the glass sheets 3, 4 of the glass sheet assembly 1 may be between 5% and 40% lower, such as between 10% and 30% lower, for example between 15% and 25% lower, than the maximum heating temperature T3 of the solder material while the local heating of the solder material 7 is provided at the station 200.

In certain embodiments of the present disclosure, the average temperature of the glass sheets 3, 4 of the glass sheet assembly 1 may be between 16% and 23% lower than the maximum heating temperature T3 of the solder material while the local heating of the solder material 7 is provided at the station 200.

The average temperature of the glass sheets 3, 4 of the glass sheet assembly 1 may in in embodiments of the present disclosure be at a temperature that is above the glass transition temperature Tg of the solder material if the solder material comprises a glass solder material 7.

If the solder material comprises a glass solder material, a preheating of the solder material 7 to a temperature above the glass transition temperature Tg of the glass solder material may e.g. help to reduce or avoid issues relating to stress buildup, such as stress buildup caused directly or indirectly by thermal expansion and/or shrinking.

The average temperature of the glass sheets 3, 4 of the glass sheet assembly 1 may in in embodiments of the present disclosure be at a temperature that is such as in the range of 5 to 20 °C, such as in the range of 8 to 16 °C, above the glass transition temperature Tg of the glass solder material 7 while the local heating of the solder material 7 is provided at the station 200.

The average temperature of the glass sheets 3, 4 of the glass sheet assembly 1 may in in embodiments of the present disclosure be a temperature that is within ± 40 °C of the glass transition temperature Tg of the solder material 7, such as within ± 30°C of the glass transition temperature Tg of the solder material, such as within ±20 °C of the glass transition temperature of the solder material while the local heating of the solder material 7 is provided at the station 200.

It is generally understood that in embodiments of the present disclosure, the solder material 7, if comprising or being a solder glass material, may, during the local heating at the edge sealing station 200, be heated to a maximum temperature T3 in the range of 40 to 120 °C, preferably in the range of 60 to 100 °C, above the glass transition temperature Tg of the glass solder material, during the softening (at time period t3-t5) of the glass solder material at edge sealing station 200.

It is generally understood that in embodiments of the present disclosure,
the solder material 7, such as a glass solder material, may be heated to a maximum target temperature T3 in the range of 350 to 420 °C, such as in the range of 370 to 410 °C, during the step of softening the solder material 7 (at time period t3-t5). When this temperature is reached, the local heating may be stopped, see t5.

It is generally understood that in embodiments of the present disclosure, the solder material 7, such as a glass solder material, may be heated to a maximum target temperature T3 that is above 350 °C, such as above 360 °C, such as above 380 °C during the step of softening the solder material 7 (at time period t3-t5).

It is generally understood that in embodiments of the present disclosure, the solder material 7, such as a glass solder material, may be heated to a maximum target temperature T3 that is below 430 °C, such as below 410 °C, such as below 395 °C during the step of softening the solder material 7 (at time period t3-t5).

In some embodiments, the local heating may be stopped t5 when the solder material 7 has reached a max target temperature T3 that is within the range of *Tm to Tm* × 1.1, such as within *Tm to Tm* × 1.05 such as within the range of *Tm to Tm* × 1.02. Tm is the rated solder material melting tempereature. For example, at a Tm = 380 °C, the range *Tm to Tm* × 1.1 will be 380 *to* 380 × 1.1 = 380 to 418 °C.

In some embodiments, the local heating may be stopped t5 when the solder material 7 has reached a max target temperature T3 that is within ± 30 °C, such as within ± 20 °C, such as within ± 10 °C of the melting temperature Tm of the solder material 7.

In some embodiments, the local heating may be stopped t5 when the solder material 7 has reached a max target temperature T3 that is within the range of the solder material 7 melting temperature Tm to Tm + 30 °C, such as within the range of Tm to Tm + 20 °C, such as within the range of Tm to Tm + 10 °C. For example, a range of Tm to Tm + 20 °C where Tm is 380 °C, will be a range within 380 °C to 400 °C.

It is generally understood that in some embodiments of the present disclosure, said locally heating may heat the glass solder material 7 to a temperature T2 and/or T3 that is above a melting temperature Tm of the solder material 7.

In some embodiments, the pressure difference between the pressure in the gap 5 of the glass sheet assembly 1 and the pressure surrounding the glass sheet assembly 1 is initiated at time t4 after the solder material 7 has reached a temperature above the melting temperature Tm of the solder material.

In some embodiments, the pressure difference between the pressure in the gap 5 of the glass sheet assembly 1 and the pressure surrounding the glass sheet assembly 1 may be initiated at time t4 when the solder material 7 has reached (by means of the local heating) a temperature that is within ± 30 °C, such as within ± 20 °C, such as within ± 10 °C of the melting temperature Tm of the solder material 7.

In some embodiments, the pressure difference between the pressure in the gap 5 of the glass sheet assembly 1 and the pressure surrounding the glass sheet assembly 1 may be initiated at time t4 when the solder material 7 has reached a temperature that is at least 10 °C, such as at least 20 °C, such as at least 30 °C above the melting temperature Tm of the solder material 7.

In some embodiments, the pressure difference between the pressure in the gap 5 of the glass sheet assembly 1 and the pressure surrounding the glass sheet assembly 1 may be initiated at time t4 when the solder material 7 has reached a temperature that is within the range of the solder material 7 melting temperature Tm to Tm + 30 °C, such as within the range of Tm to Tm + 20 °C, such as within the range of Tm to Tm + 10 °C.

It is generally understood that the melting temperature Tm of the solder material 7 may be a rated melting temperature or a rated melting temperature range of the solder material 7 which is defined by the manufacturer and/or supplier of the solder material 7.

In some embodiments, the pressure difference between the pressure in the gap 5 of the glass sheet assembly 1 and the pressure surrounding the glass sheet assembly 1 may be initiated at time t4 when the solder material 7 has reached a temperature that is within the range of *Tm to Tm* × 1.1, such as within *Tm to Tm* × 1.05 such as within the range of *Tm to Tm* × 1.02, where Tm is the rated solder material melting temperature. For example, at a Tm = 380 °C, the range *Tm to Tm* × 1.1 will be
380 *to* 380 × 1.1 = 380 to 418 °C

If the melting temperature Tm is a rated range, the pressure surrounding the glass sheet assembly 1 may be initiated at time t4 when the solder material 7 has reached a temperature that is within ± 30 °C of that melting temperature Tm range, such as within ± 20 °C of that melting temperature Tm range, such as within ± 10 °C of that melting temperature Tm range.

If the melting temperature Tm is a rated range, the pressure surrounding the glass sheet assembly 1 may be initiated at time t4 when the solder material 7 has reached a temperature that is within the melting temperature Tm range.

The melting temperature Tm may preferably be below 450 °C, such as below 410 °C, such as below 400 °C or below 390 °C. This may e.g. be relevant in the case that the glass sheets 3, 4 are thermally tempered glass sheets.

The melting temperature Tm of the solder material and/or temperature T2 and/or temperature T3 may be above 350 °C, such as above 370 °C, such as above 380 °C. The local heating may provide that this temperature may be acceptable also in case that the glass sheets 3, 4 are thermally tempered glass sheets.

In some embodiments of the present disclosure, where the solder material 7 is a glass solder material, the providing of the pressure difference may be initiated t4 when the solder material 7 has reached a temperature Te, T2 in the range of 30 to 100 °C, preferably in the range of 40 to 80 °C, such as in the range of 40 to 70 °C above the glass transition temperature Tg of the glass solder material.

In some embodiments of the present disclosure, the providing of the pressure difference may be initiated t4 when the glass solder material 7 has reached a temperature Te, T2 in the range of 350 to 400 °C, such as in the range of 365 to 385 °C.

As can be seen from fig. 7, the providing of the pressure difference may in embodiments of the present disclosure be initiated when the solder material 7 has reached a temperature T2 that is above the temperature that the solder material had at the start t3 of the local heating, and which is below the maximum temperature T3 reached by the solder material 7 during the softening of the solder material 7 at the station 200. For example, in some embodiments of the present disclosure, the providing of the pressure difference at time t4 may be initiated when the solder material 7 has reached a temperature T2 in the range of 5 to 50 °C below, such as in the range of 10 to 30 °C below, for example in the range of 5 to 20 °C below, the maximum temperature T3 reached by the solder material 7 during the softening of the solder material at the edge sealing station 200. However, in other embodiments of the present disclosure (not illustrated) the providing of the pressure difference may in embodiments of the present disclosure be initiated when (t4) the solder material 7 has reached a temperature T2 that substantially corresponds to, or even is above, the final, maximum solder material target temperature T3.

The local heating provided at time period t3-t4 may be considered a first softening provided in order to soften the solder material 7 by bringing it to an elevated (predefined) temperature T2 prior to providing the pressure difference. The local heating provided at time period t4-t5 may be considered a further softening provided in order to heat and soften the solder material 7 in order to bring the solder material 7 to the final, desired maximum sealing temperature T3 while the pressure difference is provided. It is understood that the local heating of the solder material 7 may be continued uninterrupted when initiating the providing of pressure difference between the pressure in the gap 5 of the glass sheet assembly 1 and the pressure surrounding the glass sheet assembly 1 at time t4. Hence the first and further local heating at time periods t3-t4 and t4-t5 (i.e. t3-t5) may be considered a continuous heating and softening step of the solder material 7 with an intermediate solder material temperature Te drop at/near time t4 when the providing of the pressure difference is initiated, where the temperature drop is caused by a lower average temperature of the glass sheets 3, 4 when compared to the temperature of the locally heated solder material 7.

In some embodiments of the present disclosure, the softening of the solder material 7 by locally heating the solder material 7 may be provided for a time period (see time period t3-t5) that is less than 10 minutes, such as less than five minutes, before the local heating is stopped t5.

In some embodiments of the present disclosure, the softening of the solder material 7 by locally heating the solder material 7 is provided for a time period t3-t5 that is less than 5 minutes, such as less than 2 minutes, such as less than 100 seconds, before the local heating is stopped t5.

In some embodiments of the present disclosure, the softening of the solder material 7 by locally heating the solder material 7 and providing the pressure difference between the pressure in the gap 5 and the pressure surrounding the glass sheet assembly may be provided for a time period (see t4-t5) that is less than 5 minutes, such as less than two minutes, such as less than 70 seconds before the local heating is stopped and/or before the pressure difference between the pressure in the gap and the pressure surrounding the glass sheet assembly is eliminated.

In some embodiments of the present disclosure, the softening of the solder material 7 by locally heating the solder material 7 and providing the pressure difference between the pressure in the gap 5 and the pressure surrounding the glass sheet assembly may be provided for a time period (see t4-t5) that is larger than 5 seconds, such as larger than 10 seconds, such as larger than 30 seconds, before the local heating is stopped.

In some embodiments of the present disclosure, the softening of the solder material 7 by locally heating the solder material 7 while also providing the pressure difference between the pressure in the gap 5 and the pressure surrounding the glass sheet assembly may be provided for a time period (see t4-t5) that is between 5 seconds and 5 minutes, such as between 10 seconds and 2 minutes, for example between 30 seconds and 120 seconds or between 30 seconds and 70 seconds, before the local heating is stopped at t5.

In some embodiments of the present disclosure, the softening of the solder material 7 by locally heating the solder material 7 and providing the pressure difference between the pressure in the gap 5 and the pressure surrounding the glass sheet assembly may be provided for a time period (see t4-t5) that is less than 150 seconds, such as less than 100 seconds, such as less than 80 seconds, before the local heating is stopped.

In some embodiments of the present disclosure, the softening of the solder material 7 by locally heating the solder material may be provided for a time period (see time period t3-t5) that is less than 5 minutes, such as less than 3 minutes, such as less than 2 minutes, for example less than 100 seconds, before the local heating is stopped (t5).

In some embodiments of the present disclosure, the softening of the solder material 7 by locally heating the solder material may be provided for a time period (see time period t3-t5) that is less than 5 minutes, such as less than 3 minutes, such as less than 2 minutes, for example less than 100 seconds, before the local heating is stopped (t5).

In some embodiments of the present disclosure, the softening of the solder material 7 by locally heating the solder material may be provided for a time period (see time period t3-t5) that is less than 6 minutes, such as less than 3 minutes, such as less than 2 minutes, for example less than 100 seconds, before the pressure difference between the pressure in the gap 5 and the pressure surrounding the glass sheet assembly 1 is eliminated.

In some embodiments of the present disclosure, the softening of the solder material 7 by locally heating the solder material may be provided for a time period (see time period t3-t5) that is larger than 10 seconds, such as larger than 30 seconds, for example larger than 60 seconds.

In some embodiments of the present disclosure, the softening of the solder material 7 by locally heating the solder material (t3-t5) may be provided for a time period (see time period t3-t5) that is within 10 to 130 seconds, such as within 30 to 100 seconds for example within 40 seconds to 90 seconds.

In some embodiments of the present disclosure, the softening of the solder material 7 by locally heating the solder material 7 prior to providing the pressure difference between the pressure in the gap 5 and the pressure surrounding the glass sheet assembly may be provided for a time period (see t3-t4) of at least 5 seconds such as at least 10 seconds, for example at least 30 seconds before the providing of the pressure difference is initiated.

In some embodiments of the present disclosure, the softening of the solder material 7 by locally heating the solder material 7 prior to providing the pressure difference between the pressure in the gap 5 and the pressure surrounding the glass sheet assembly may be provided for a time period (see t3-t4) of less than 3 minutes such as less than 100 seconds, such as less than 80 seconds before the providing of the pressure difference is initiated.

In some embodiments of the present disclosure, the softening of the solder material 7 by locally heating the solder material 7 prior to providing the pressure difference between the pressure in the gap 5 and the pressure surrounding the glass sheet assembly may be provided for a time period (see t3-t4) of between 5 seconds and 2 minutes, such as between 10 seconds and one minute, such as between 20 seconds and 40 seconds before the providing of the pressure difference is initiated.

The local heating provided during t3-t5 provides that the solder material 7 may heat a small area of the glass sheets 3, 4 by conduction heating to a temperature at or close to T2 and T3. If the glass sheets 3, 4 are thermally tempered glass sheets, a de-tempering of the glass sheets due to elevated temperature T2, T3 may however be limited or even avoided since the heating is provided only locally at a desired area at one glass sheet side opposite to and/or in touch with the solder material 7.

In some embodiments of the present disclosure, it is understood that the heating power over substantially the entire solder material width W1 provided by the heating beam(s) 9 may be changed, such as increased or decreased, during the heating of the solder material strip(s) 7. This may for example be provided before or after, or substantially when, a force clamping is initiated (see t4 of figs 7-8).

In further embodiments of the present disclosure, it is understood that the heating power over substantially the entire solder material width W1 provided by the heating beam(s) 9 may be reduced towards the end of the heating of the solder material, e.g. at the last 20% of the time span between t4 and t5 during the heating of the solder material strip 7 by the one or more heating beams 9.

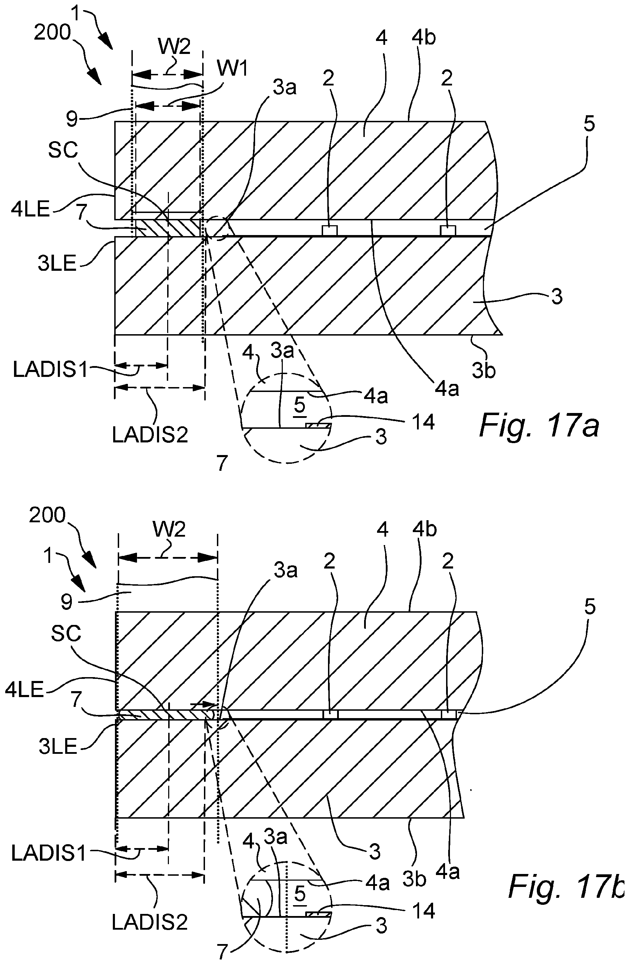

In some embodiments of the present disclosure, it is understood that the heating power over substantially the entire solder material width W1 provided by the heating beam(s) 9 may be maintained substantially constant during the entire heating (see e.g. t3-4 and/or t4-t5 illustrated in figs. 7-8) of the solder material 7 by one or more laser light beams. In other embodiments, the heating power may be adjusted in the width W1 direction of the solder material during the local heating by the one or more heating beams. Embodiments hereof are described in more details below, e.g. in relation to one or more of figs. 17a-20.

Fig. 7 illustrates a further embodiment of the present disclosure, where the elimination of the pressure difference between the pressure P2 in the gap 5 and the pressure P1 surrounding the glass sheet assembly 20 is provided at a time t6 after the locally heating of the solder material 7 is stopped t5. In the time between t5 and t6, the solder material 7 is cooled. This cooling may partly, primarily or substantially fully be obtained by means of the glass sheets 3, 4 by conduction cooling, as these have a lower average temperature (such as about a preheating temperature T1, see fig. 8) than the locally heated solder material 7. This cooling may happen relatively fast, see the temperature drop of the solder material 7 temperature Te at the first third, or first half, of the time period between t5-t6. The cooling of the solder material 7 may provide that the solder material 7 at least partly hardens/gets less fluid due to cooling before the pressure difference is eliminated at t6. The cooling in the time interval t5-t6 may help to provide that a shape and/or size of the solder material 7 that is obtained during providing the pressure difference and locally heating the solder material 7 in time period t3-t5 may be at least partly or substantially fully maintained after the pressure difference is eliminated at t6. Additionally or alternatively, a "pre-tensioning" of the solder material 7 and/or glass sheets at and/or near the solder material 7, which may be obtained pr facilitated while the pressure difference and local heating is provided in time period t3-t5, may be at least partly, or substantially fully maintained after the pressure difference is released/eliminated.

In some embodiments of the present disclosure, the elimination of the pressure difference between the pressure P2 in the gap 5 and the pressure P1 surrounding the glass sheet assembly 20 is provided (t6) at least 2 seconds, such as at least five seconds, such as at least 10 seconds after the locally heating of the solder material 7 is stopped at time t5.

In some embodiments of the present disclosure, the elimination of the pressure difference between the pressure P2 in the gap 5 and the pressure P1 surrounding the glass sheet assembly 20 is provided (t6) at least 30 seconds, such as at least one minute after the locally heating of the solder material 7 is stopped at time t5.

In some embodiments of the present disclosure, the elimination of the pressure difference between the pressure P2 in the gap 5 and the pressure P1 surrounding the glass sheet assembly 20 may be provided (t6) at the latest five minutes after, such as at the latest three minutes after, such as at the latest one minute after, said locally heating of the solder material 7 is stopped (t5).

For example, in some embodiments of the present disclosure, the time period t5-t6 between the time t5 of stopping the locally heating of the solder material 7, and the time t6 of eliminating the pressure difference between the pressure P2 in the gap 5 and the pressure P1 surrounding the glass sheet assembly 20, may be between 2 seconds and 10 minutes, such as between 5 seconds to 5 minutes, for example within 10 seconds to 100 seconds.

However, in other embodiments of the present disclosure, the elimination of the pressure difference between the pressure P2 in the gap 5 and the pressure P1 surrounding the glass sheet assembly 20 may be provided substantially at the same time as the locally heating of the solder material 7 is stopped t5.

Fig. 8 illustrates schematically an embodiment of the present disclosure wherein a preheating of a glass sheet assembly 1 is provided. It is understood that the process illustrated at time t2-t5 may substantially correspond to what is described above in relation to various embodiments of fig. 7. Fig. 8 illustrates the temperature Te of the solder material 7 during processing of the glass sheet assembly 1, including preheating.

At time t1, a preheating of the entire glass sheet assembly 1 is started in a preheating station 100 as e.g. described previously. At time t0 the glass sheet assembly may have a temperature T0 between 0 and 100 °C, for example between 10 and 50 °C, such as between 15 and 35 °C. The preheating may be provided by means of convection heating and/or conduction heating in the chamber 101. The gap 5 may be sealed or unsealed during the preheating. The preheating causes the temperature of the entire glass unit assembly 1, and hence also the solder material 7 temperature Te, to increase in the time period t1-t2. At time t2, the glass sheet assembly 1 has reached a preheating target temperature T1.

Also, it can be seen that during preheating (time t1-t2 in fig. 8) of the glass sheet assembly 1 at station 100, the increase in solder material temperature Te per time unit may reduce as the solder material temperature Te gets closer to the target preheating temperature T1 at time t2. This may e.g. be caused by that the temperature difference between the preheating target temperature (e.g. a temperature setting) T1 and the solder material temperature Te gradually reduces due to the preheating of the solder material 7 over time period t1-t2.

In the embodiment illustrated in fig. 8, the solder material 7 is a glass solder material, and the preheating target temperature T1 is a temperature, such as a predefined temperature, set to a temperature above the glass transition temperature Tg of the solder material 7. This may e.g. help to reduce or avoid issues relating to stress buildup, such as stress buildup caused directly or indirectly by thermal expansion and/or shrinking.

In other embodiments of the present disclosure, the preheating target temperature T1 may be a temperature, such as a predefined temperature, set to a temperature below a glass transition temperature Tg of the solder material 7.

The average temperature of the glass sheets 3, 4 of the glass sheet assembly 1 at T1 may in in embodiments of the present disclosure be a temperature that is in the range of 5 to 20 °C, such as in the range of 8 to 16 °C, above the glass transition temperature Tg of glass solder material 7 .

It is generally understood that the glass transition temperature Tg may be a rated glass transition temperature of the glass solder material 7 which may be defined by the manufacturer and/or supplier of the glass solder material.

In some embodiments of the present disclosure, the glass sheet assembly 1 may be heated in the preheating station 100 in the time period t1-t2 to a temperature in the range of 5-40 °C, such as in the range of 5 to 20 °C, preferably in the range of 8 to 16 °C above the glass transition temperature Tg of the glass solder material 7. This may be determined depending on the softening properties of the solder material 7.

In some embodiments of the present disclosure, the glass sheet assembly 1 may be heated in the preheating station 100 to a temperature T1 above 260 °C, such as above 280 °C, such as above 300 °C. This may be determined depending on e.g. the softening properties of the solder material 7.

In some embodiments of the present disclosure, the glass sheet assembly 1 may be heated in the preheating station 100 to a temperature T1 above 315 °C, such as above 330 °C.

In some embodiments of the present disclosure, the glass sheet assembly 1 may be heated in the preheating station 100 to a temperature T1 in the range of 260 to 350 °C, such as in the range of 280 to 330 °C, such as in the range of 300 to 330 °C. This may be determined depending on e.g. the softening properties of the solder material 7.

In some embodiments of the present disclosure, the glass sheet assembly 1 may be heated in the preheating station 100 to a temperature T1 in the range of 260 to 330 °C, such as in the range of 270 to 300 °C.

In some embodiments of the present disclosure, if the glass sheets 3, 4 of the assembly 1 are thermally tempered glass sheets, the preheating target temperature T1 may be set to a temperature that reduces or substantially avoids de-tempering of the glass sheets 3, 4 due to the preheating.

In some embodiments, the preheating target temperature T1 may be within ± 30 °C, such as within ± 20 °C, such as within ± 10 °C or within ± 5 °C of the glass transition temperature Tg of the solder material 7.

In some embodiments of the present disclosure, the preheating target temperature T1 may be within the range of *Tg to Tg* × 1.2, such as within *Tg to Tg* × 1.15, such as within the range of *Tg to Tg* × 1.1, where Tg is a rated solder material 7 glass transition tempereature Tg. For example, at a Tg = 308 °C, the range *Tg to Tg* × 1.1 will be 308 *to* 308 × 1.1 = 308 to 339 °C.

In certain embodiments of the present disclosure, the preheating target temperature T1 may be within the range of *Tg to Tg* × 1.1, such as within *Tg to Tg* × 1.05 such as within the range of *Tg to Tg* × 1.02.

In some embodiments of the present disclosure, if the glass sheets 3, 4 of the assembly 1 are thermally tempered glass sheets, the preheating target temperature T1 (and also e.g. temperature at the edge sealing station chamber 201 controlled by means of a heater 220, see e.g. figs. 3-4) may be set to a temperature that provides that a de-tempering of the glass sheets 3, 4 of the assembly 20, after the edge sealing at the edge sealing station 200, is less than 20%, such less than 10%, or less than 3% when compared to the initial tempering strength of the glass sheets before preheating of the glass sheet assembly 1 and the local heating at the edge sealing station 200.

At time t2, the desired preheating target temperature T1 is reached, and in the time period t2-t3, the preheated glass sheet assembly 1 may await being moved into the edge sealing station 200 and/or may be moved into the edge sealing station 200. Glass sheet assembly 1 temperature, and hence the solder material temperature, is maintained substantially constant in time period t2-t3 at the preheating station. In some embodiments, the time period t2-t3 may be low, but this may depend om various factors such as the type of moving system, whether a "buffer" of preheated glass sheet assemblies 1 ready to be subjected to the processing in the edge sealing station may be desired, whether a "temperature soaking" at the preheating station is desired to obtain some advantages by assuring that the glass sheet assembly has been kept at a desired preheating temperature for some time and/or the like. In some embodiments, the time period t2-t3 may be optional and thus omitted.

The processing of the glass sheet assembly is then continued at the edge sealing station at time t3 as e.g. described according to various embodiments of the present disclosure in relation to fig. 7.

It is generally understood that in one or more embodiments of the present disclosure, if the solder material 7 of the glass sheet assembly 1 is or comprises a glass solder frit material, it may comprise glass powder, a binder material such as an organic binder material, and a filler material such as one or more inorganic fillers. In some embodiments, a solvent material may have been removed, e.g. by means of heating, during manufacturing of the glass sheet assembly 1 in order to obtain the solder material of the glass sheet assembly 1. Hence, the solder material 7 of the assembly 1 may be substantially free from solvent prior to processing at e.g. the preheating station 100.

It is generally understood that in one or more embodiments of the present disclosure, if the solder material 7 comprises a glass solder material 7, binder material may be present in the solder material 7 strips of the glass sheet assembly 1. In some embodiments, at the time period t1-t3, such as t2-t3, the preheating at the preheating target temperature T1 may provide binder burn out / binder removal from the solder material 7. Hence, already when the glass sheet assembly is placed at the edge sealing station 200 and/or when the local heating of the solder material 7 of the glass sheet assembly 1 by means of one or more heating beams is initiated (time t3 - see fig. 7 or 8) at the edge sealing station 200, only a low amount of binder material, or substantially no binder material, may be present in the solder material 7. In some embodiments, the binder material may comprise or consist of a polymer. One example of a binder material may be propylene carbonate (C4H6O3). For example, some binder material types may start to degenerate or in other ways be removed from the solder material 7 when heated to a temperature above 150 °C, such as above 200 °C. Hence, the preheating target temperature T1, or even a lower heating temperature, may be sufficient to provide sufficient and efficient binder burnout if binder is present in the solder material.

In some embodiments, the time period t1-t3 may be in the range of 10 minutes to 90 minutes, such as in in the range of 15 minutes to 70 minutes or in the range of 20 minutes to 50 minutes.

In some embodiments, the time period t2-t3 may be in the range of 5 minutes to 40 minutes, such as in in the range of 10 minutes to 35 minutes or in the range of 15 minutes to 30 minutes. At time T2 to t3, the preheating target temperature T1 is maintained, and the glass sheet assembly/ies is/are maintained at the elevated temperature T1 at the preheating station.

It is generally to be understood that the actions that are initiated at one or more of times t1, t2, t3, t4 and t5 may be controlled based on sensor input and/or based on timer input.

For example, the preheating time from t1-t2 may be a predefined time interval that is based on experiential data of how long time the preheating takes. Alternatively or additionally, a monitoring system comprising one or more sensors such as temperature sensors may monitor the preheating temperature of the glass sheet assemblies and based thereon determine when an assembly 1 is sufficiently preheated.

The local heating time from t3-t4 may be a predefined time interval that is based on experiential data of how long time the initial local heating of the solder material, by means of one or more beams, takes before the solder material is soft enough to allow providing the pressure difference between the pressure in the gap 5 of the glass sheet assembly 1 and the pressure surrounding the glass sheet assembly 1 in the edge sealing chamber 201.

Alternatively or additionally, a monitoring system comprising one or more sensors such as temperature sensors may monitor the temperature of the solder material at one or lore locations of the solder material around glass sheet assembly and based thereon a controller may determine when to provide the pressure difference at time t4.

The local heating time from t4-t5 may be a predefined time interval that is based on experiential data of how long time the local heating of the solder material takes after the pressure difference is provided before the solder material has reached the desired maximum temperature T3. Alternatively or additionally, a monitoring system comprising one or more sensors such as temperature sensors may monitor the temperature of the solder material at one or lore locations of the solder material around glass sheet assembly and based thereon a controller may determine when to stop the local heating provided by heater(s) 15.

The time period from t5-t6 may be a predefined time interval that is based on experiential data of how long time a sufficient solder material cooling takes. Alternatively or additionally, a monitoring system comprising one or more sensors such as temperature sensors may monitor the temperature of the solder material at one or lore locations of the solder material around glass sheet assembly and based thereon a controller may determine when to eliminate the pressure difference.

Fig. 9 illustrates a flowchart relating to a method of processing a glass sheet assembly 1, 20 for a vacuum insulated glass VIG unit, according to embodiments of the present disclosure.

At step S91 (Preheat ass. to T1), the glass sheet assembly 1 is preheated at a preheating station, see e.g. station 100 in figs. 3 and 4 and/or time range t1-t3 of fig. 8.

When the glass sheet assembly 1 has been preheated to a uniform preheating target temperature T1 at the preheating station, the glass sheet assembly 1 is removed at step S92 (Pos. ass. At ESS) from the preheating station and positioned in an edge sealing station 200 chamber 201. See e.g. fig. 3 and 4. Also, binder, such as a polymer, (if present in the solder material) may be partly or fully removed/burned out during the preheating step S1 as e.g. previously described. In other embodiments, binder material, such as a polymer, if present in the solder material 7, may have been partly or fully removed, such as burned out, from the solder material 7 prior to the preheating step.

Then, at step S93 (Heat ES by laser), the local heating of the solder material 7 is started (see time t3 of figs. 7-8). This may be provided by means of e.g. one or more laser beams 9 and may comprise a plurality of heating iterations by one or more laser beams as e.g. described in more details below.

When a desired, local, substantially uniform, solder material 7 temperature is reached, e.g. a temperature T2 (or T3 if T2=T3) as described above, the temporary pressure difference is provided - Step S94 (Prov. Press. diff.) - at the edge sealing station, see time t4 in figs. 7 and 8. This may be provided by means of an over pressure in the edge sealing chamber 201 or by means of evacuating the glass assembly 1 gap 5. The local heating solder material 7 heating started at step S93 is continued until a desired solder material target temperature T3, such as a maximum temperature, is reached.

When the desired solder material target temperature T3, such as a maximum solder material temperature, has been reached, the local heating is stopped at step S95 (Stop heating at target temp. (T3)). This causes the solder material to cool, e.g. by conduction cooling by means of the glass sheets. After this, when the solder material is sufficiently cooled, the pressure difference is eliminated at Step S96 (Elim. Press. diff), and in step S97 (Pos. ass. at evac. stat.), the edge sealed glass sheet assembly 20 is positioned at the evacuation station.

At the evacuation station, the gap 5 of the edge sealed assembly 20 is evacuated (Step S98 - Evac. ass.) to a pressure below 0.05 mbar, such as below 0.005 mbar, such as below 0.003 mbar or below 0.001 mbar, and then the gap is sealed at Step S99 (Seal gap of ass.), hereby a VIG unit 30 is obtained. The VIG unit 30 is then removed from the evacuation station 300 and cooled at step S910 (Cool VIG), e.g. by means of convection cooling. Some VIG unit cooling may also be allowed at the evacuation station 300 before moving the VIG unit from the evacuation station 300.

In some embodiments, the temperature in the evacuation station 300 chamber may be maintained, e.g. by convection heating, at a temperature above 200 °C, such as above 250 °C while the gap evacuation and sealing is provided at Step S98-S99.

In some embodiments, the temperature in the evacuation station 300 chamber 301 may be maintained, e.g. by convection heating, at a temperature between 100 °C, and 300 °C, such as at a temperature between 150 °C, and 250 °C, such as at a temperature between 190°C, and 240°C while the gap evacuation and sealing is provided at step S98-S99.

In some embodiments, the temperature in the evacuation station 300 chamber may in in embodiments of the present disclosure be a temperature that is below the glass transition temperature Tg of the solder material 7 while the gap evacuation and sealing is provided at Step S98-S99.

In some embodiments, the temperature in the evacuation station 300 chamber may in in embodiments of the present disclosure be a temperature that is at or above the glass transition temperature Tg of the solder material 7 while the gap evacuation and sealing is provided at Step S98-S99.

In some embodiments where the solder material 7 is a glass solder material, the temperature in the evacuation station 300 chamber 301 may be a temperature that is larger than 100 °C, such as larger than 150 °C, for example larger than 200 °C or larger than 250 °C, but lower than the glass transition temperature Tg of the solder material, while the gap 5 evacuation and sealing is provided at Step S98-S99.

Figs. 10-14 illustrates schematically and in perspective, the softening of the solder material 7 in the edge sealing station, by means of local heating by one or more heaters 15- 15_4, according to various embodiments of the present disclosure. In the figures 10-13 the local heating is provided by one or more heating beams 9, 9_1, 9_2, 9_3, 9_4, such as laser light beams, according to various embodiments of the present disclosure.

The glass sheet assembly 1 is designed and arranged so that the heating beam 9, 9_1, 9_2, 9_3, 9_4 is transmitted through the major glass sheet 4 surface 4b of the glass sheet 4 of the assembly 1 that is arranged between the heater providing the heating beam and the solder material 7, so as to heat the solder material 7. See also fig. 6.

The solder material 7 is provided in four elongated solder material stripes/strips each having a longitudinal direction LDS that may be substantially parallel to the longitudinal extend of a proximate edge of the glass sheets 3, 4.

The glass sheet assembly 1 solder material 7 comprises:
- a first solder material strip A-B with length L_AB extending between the first solder material corner region A and the second solder material corner region B,
- a second solder material strip B-C with length L_BC extending between the second solder material corner region B and a third solder material corner region C,
- a third solder material strip C-D with length L_CD extending between the third solder material corner region C and a fourth solder material corner region D, and
- a fourth solder material strip D-A with length L_DA extending between the fourth solder material corner region D and the first solder material corner region A.

The solder material strips A-B and C-D are parallel. The solder material strips B-C and D-A are parallel. The solder material strips A-B and C-D extend in a longitudinal direction LDS that is substantially perpendicular to the longitudinal direction LDS of the solder material strips B-C and D-A.

Length L_BC and L_DA of the solder material strips B-C and D-A may be substantially the same. Additionally, the length L_AB and L_CD of the solder material strips A-B and C-D may be substantially the same. The length L_AB and L_CD of the solder material strips A-B and C-D may be smaller or larger than the length L_BC and L_DA of the solder material strips B-C and D-A. In some embodiments, all strips A-B, B-C, C-D, D-A may have substantially the same length. This may e.g. depend on the shape of the glass sheets.

Each of the solder material corner regions A, B, C, D may be arranged substantially at, near and/or opposite to a corner of one or both glass sheets 3, 4 proximate the respective solder material corner regions A, B, C, D.

The heater 15, 15_1, 15_2, 15_3, 15_4 illustrated in the figures 10-13 may comprise one or more movable mirrors that is/are controlled by a mirror controller according to a predefined control scheme (e.g. stored as software in a data storage) to be moved so as to direct a heating beam 9, 9_1, 9_2, 9_3, 9_4, such as a laser beam, towards the solder material strips A-B, B-C, C-D and D-E.

In fig. 10, a single laser beam 9 is moved consecutively along the solder material strips between the solder material corners from corners A-B, B-C, C-D and D to A in a plurality of heating iterations in order to locally and uniformly heat and soften the solder material 7. E.g. in order to obtain the temperature T2 and/or T3 as previously described in relation to one or more of figs. 6-9.

In fig. 11, two laser beams 9_1, 9_2 may be moved consecutively along the solder material strips from corners A-B, B-C, C-D and D to A in a plurality of heating iterations in order to locally and uniformly heat and soften the solder material 7. E.g. in order to obtain the temperature T2 and/or T3 as previously described in relation to one or more of figs. 6-9. In this embodiment of fig. 11, the laser beam spots of beams 9_1, 9_2 that heat the solder material 7 may be spaced apart. In some embodiments, the laser beam 9_1, 9_2 spots that heats the solder material 7 may e.g. as illustrated in the embodiment of fig. 10, be spaced apart with a distance corresponding to half of the full, summarized length/extent Σ *L_{solder}* = L_AB + L_BC + L_CD + L_DA of the solder material strips A-B, B-C, C-D, D-E.

In other embodiments, the local heating of the solder material by each beam 9_1, 9_2 may be divided between the beams (see also e.g. AR1 and AR2) so that one of the beams heat a first longitudinal extent of the solder material 7 whereas the other beam heat another longitudinal extent of the solder material 7. The two beams 9_1, 9_2 may here hence together heat the total extent Σ *L_{solder}* of the solder material 7 with no or only partly overlap in heating areas of the solder material. For example, one heater 15_1 beam 9_1 may heat solder material strip A-B and B-C whereas the other heater 15_2 beam 9_2 heat solder material strip C-D and C-A. The transition between the heating areas may naturally be adapted as desired according to what may e.g. be considered beneficial in relation to e.g. the properties of the heaters, mirror(s) and/or different conditions at the edge sealing station 200. Moreover, the lengthwise coverage of the beams 9_1, 9_2, respectively along the solder material length Σ *L_{solder}* may be adjusted to be equally long or so that one may be longer than the other.

If for example two laser light beams heat the solder material 7 (e.g. as in fig. 11), and each heat the full extent of the solder material, i.e. so that each of the laser light beams are moved to heat the full extent of the solder material stripes/strips A-B, B-C, C-D and D-A, then the same area of the solder material has been subjected to two heating iterations when both laser light beam spots have travelled around/swept the full extent L_AB + L_ BC + L_CD + L_DA of the solder material 7. On the other hand, if one of the beams 9_1, 9_2 heat a first part of the extent of the solder material, whereas the other beam heat the remaining part of the extent of the solder material 7, then it may be considered as one heating iteration when the total extent of the solder material has been heated by a laser beam spot.

In fig. 12, four heaters 15_1, 15_2, 15_3, 15_4 are provided so that four heating beams 9_1, 9_2, 9_3, 9_4 together heat the solder material 7. In some embodiments these may be moved along the solder material in the same direction so that each heat the total length Σ *L_{solder}* of the solder material, as indicated by arrows in the figure.

In other embodiments, the beams may be controlled so that each of the beams 9_1, 9_2, 9_3, 9_4 is moved along one solder material stripe A-B, B-C, C-D, D-A and only heat that stripe. Again, this heating may naturally be divided so that e.g. one, more than one, or all, of the beams provide heating also at the solder material corners where the transition between the solder material strips is provided and may heat both stripes/strips terminating at the respective solder material corner. In this case, when the full length of all solder material stripes have been subjected one time to a laser light spot, this may be considered a heating iteration.

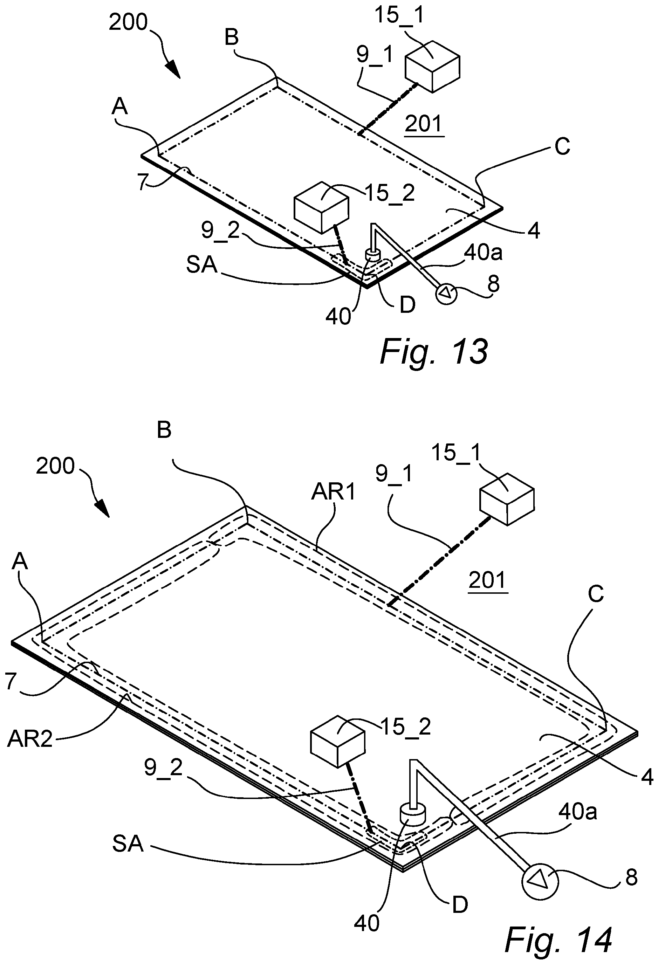

Figs. 13 and 14 illustrates schematically and in perspective an embodiment of the present disclosure wherein two laser light beams 9_1, 9_2 are used in order to heat the full extent of the solder material. In this embodiment, the temporary pressure difference between the pressure in the gap 5 of the glass sheet assembly 1 and the pressure surrounding the glass sheet assembly 1 in the edge sealing chamber 201, is provided by evacuating the gap 5 of the glass sheet assembly.

A suction cup 40 is used for this and is in fluid communication with one or more evacuation pumps 8 by means of a piping connection 40a. See also figs. 3 and 4.

The evacuation outlet 6 for evacuating the gap 5 in the glass sheet assembly 1 may thus be provided by means of a through hole in a glass sheet, such as an upper glass sheet 4 of the glass sheet assembly 1. The evacuation cup 40 support directly or indirectly on the surface 4a of this glass sheet 4 to provide an airtight seal, and a gasket may hence be placed between the glass sheet assembly 1 and the cup 41 body.

The evacuation cup 40, the suction connection 40a, such as a piping, and the evacuation pump 8 together provides a clamping arrangement 40, 8, 40a which is configured to provide a force clamping of the glass sheet assembly 1 to provide that the glass sheets 3, 4 clamp the heated and softened solder material 7. E.g. at time t4 as described above in relation to e.g. fig. 7 and/or 8.

The evacuation cup 40 is arranged on an upper, outer, major side surface 4b of the glass sheet assembly. An inner cavity of the evacuation cup 40 is in fluid communication with the gap 5 by means of an evacuation opening 6 (see figs 1 and 2) through the second glass sheet 4. The inner cavity 42 of the evacuation cup is in fluid communication with the suction connection 40a.

In some embodiments of the present disclosure, at least the suction connection 40a, such as a piping, and possibly also the suction cup 40 dependent on cup size and/or evacuation opening 6 location, may act as an obstacle that prevents at least one of the laser light beams from heating the full extent L_AB + L_BC + L_CD + L_DA of the solder material 7.

Hence, the piping system 40a, cup 40 and/or other parts in the chamber 201 may provide an obstacle providing a shadow effect/area SA covering the solder material where one of the laser light beams, in this case beam 9_1, cannot locally heat the solder material 7. This is the case in fig. 13 and 14 where the piping 40a provides that the heater / means for providing a laser beam 15_1 cannot direct a beam 9_1 towards the shadow area SA of the solder material 7. Therefore the heating of the full extent of the solder material 7 may be divided between two heaters 15_1, 15_2 as e.g. illustrated in figs. 13 and 14. Here, a first heater 15_1 provides a first beam 9_1 which heats a first area AR1 of the solder material 7, whereas a further/other heater 15_2 provides a second beam 9_2 which heats a second area SA, AR2 of the solder material 7. The second area may hence comprise the part of the solder material 7 that is prevented from being heated by a first beam 9_1 from the heater 15_1.

The heaters 15_1, 15_2 may be displaced in order to emit heating beams 9_1, 9_2 from different locations and/or angles at the station and towards the solder material of the glass sheet assembly 1.

It is generally understood that in some embodiments, laser light generated by a laser light source may be split by a beam splitter to:
- a first laser beam steering mirror which provides a first heating beam 9_1, and
- to a further laser beam steering mirror which provides a second heating beam 9_2.

In that case, the laser beam steering mirrors may be considered (part of) different heaters even though the laser light source from which the laser light energy originates is the same.

It is generally understood that in other embodiments, a first laser light source may be dedicated for generating laser light to a first laser beam steering mirror which provides/directs a first beam 9_1, and a second laser light source may be dedicated for generating laser light to a second laser beam steering mirror which provides/directs a second beam 9_2. Hence different laser sources may be considered part of different heaters.

It is generally understood that in some embodiments of the present disclosure, each time a laser light beam spot visits or revisit the same part of the solder material 7 to heat it, this may be considered a new heating iteration.

Common to the various embodiments illustrated in figs. 10-14 may, in some embodiments of the present disclosure , be that the solder material 7 is softened by moving one or more laser light beams 9, 9_1, 9_2, 9_3, 9_4 along the longitudinal extent L_AB, L_ BC, L_CD, L_DA of the solder material 7 in a lengthwise direction of the solder material 7 at a speed sufficient to provide a uniform heating and thereby softening of the solder material 7 along the full extent L_AB + L_ BC, + L_CD + L_DA of the solder material 7 of the glass sheet assembly 1. This may be provided prior to and/or during providing the clamping/force clamping of the solder material 7 by means of the glass sheets 3, 4.

In some embodiments, the force clamping may be provided by providing a pressure difference between a pressure P2 in the glass assembly 1 gap 5 and the pressure P1 surrounding the glass sheet assembly 1 so as to force the first glass sheet 3 and the second glass sheet 4 towards each other. E.g. as explained above according to various embodiments of the present disclosure. In other embodiments of the present disclosure, the force clamping may be obtained by means of a mechanical clamping (see e.g. fig. 16). For example, in some embodiments, the mechanical clamping may comprise using one or more actuators for forcing a pressing member towards a major surface 4b of the glass sheet assembly in order to provide the force clamping. Hence, the force from the one or more actuators is transmitted through the glass sheet(s) and provides a clamping, and e.g. also deformation, of the heated and softened solder material 7.

Fig. 14 moreover illustrates an embodiment of the present disclosure where the solder material 7 is divided into two different heating areas AR1, AR2. The first heating area AR1 may be heated by a beam 9_1 from the first heater 15_1, such as comprising first laser beam steering mirror, and the second heating area AR2 may be heated by a beam 9_2 from the second heater 15_2, such as comprising a second laser beam steering mirror. In fig. 14, the areas AR1, AR2 does substantially not overlap. In other embodiments, the areas AR1, AR2 may partly overlap.

The first area AR1 covers a minor portion of the solder material strip length L_AB (See fig. 10), over corner area B, extends along the entire solder material strip length L_BC, over corner area C and covers a major part of the length of the strip length L_CD. The second area AR2 covers a minor portion of the solder material strip length L_CD, extends over corner area D, extends along the entire solder material strip length L_DA, extends over corner A and covers a major part of the length of the solder material strip length L_A-B. Naturally, in other embodiments, the solder material 7 may be divided in other ways and even between even more heaters, see e.g. fig. 12.

In some embodiments, the solder material 7 at the heating areas AR1, AR2 may be heated simultaneously by different beams 9_1, 9_2.

In other embodiments, the solder material at the heating areas AR1, AR2 may be heated consecutively by different beams 9_1, 9_2 during a heating iteration. In this case, only one beam 9_1, 9_2 may be present (heat) at the time, and the other beam may be off or the like. For example, the beam 9_2 may heat the solder material 7 at the strip C-D, over the corner area D and towards the corner area A, over the corner area A and to the termination where the first area AR1 starts (unless an overlap is provided). Then beam 9_2 is turned off and the solder material 7 at the area AR1 may then be started to be heated by the beam 9_1 at the solder material 7 at heating area AR1 at strip A-B, over corner area B and towards the corner area C, over the corner area C and to the termination where the second heating area AR2 starts again. Then the beam 9_1 may be turned off, and the second beam 9_2 may be turned on again and so on.

In some embodiments, the shift between beams 9_1, 9_2 may be provided by turning on and off different respective laser light sources dedicated for heating the solder material 7 at the respective area AR1, AR2. In other embodiments, a shifter may shift, such as direct, laser light from the same laser light source between the different heaters 15_1, 15_2, such as between different emitters, such as between different mirrors, for example by means of an optical arrangement comprising one or more lenses, mirrors and/or the like. Hence, in this case, the laser light source may be maintained on/active, possibly, in some embodiments, with a short "off time" or "idle time" during a shift between heaters 15_1, 15_2. However, in this embodiment, it may be the same laser light source for both heaters 15_1, 15_2 that is be used for generating laser light for heating the solder material 7 at both areas AR1, AR2.

It is generally understood that the solder material 7, during the step of locally heating and softening the solder material, may in embodiments of the present disclosure be heated by the one or more beams 9, 9_1, 9_2, 9_3, 9_4 so that the temperature difference between any two positions of the solder material along the full extent L_AB + L_ BC, + L_CD + L_DA of the solder material 7 of the glass sheet assembly does not exceed 2°C, such as does not exceed 0.5 °C such as does not exceed 0.2 °C. This may e.g. in some embodiments of the present disclosure be provided during the time period t3-t5, during the time period t3-t4 and/or during the time period t4-t5 as illustrated, and/or described above, e.g. in relation to one or more of figs. 7, 8 and/or 9.

It is generally understood that the solder material 7, during the step of locally heating and softening the solder material, may in embodiments of the present disclosure be heated by the one or more heating beams 9, 9_1, 9_2, 9_3, 9_4 so that the temperature difference between any two positions of the solder material 7 along the full extent L_AB + L_ BC, + L_CD + L_DA of the solder material 7 of the glass sheet assembly does not exceed 2°C, such as does not exceed 0.5 °C such as does not exceed 0.2 °C during at least 40%, such as during at least at least 70%, such as during at least 95%, of the total heating time (t3-t5) by means of the one or more heating beams 9, 9_1, 9_2, 9_3, 9_4.

The temperature difference between any two positions of the solder material along the full extent L_AB + L_ BC, + L_CD + L_DA of the solder material 7 of the glass sheet assembly 1 may be determined by the movement speed of the laser light beam(s). If the laser light beams are moved slowly, the temperature difference will be larger as the temperature difference to a large extend is determined by the heating of the solder material 7 by each heating iteration of the laser beam(s), i.e. each passage of each position of the solder material 7.

During the step of softening the solder material 7 at the edge sealing station, the solder material 7 may be heated by the one or more beams 9, 9_1, 9_2, 9_3, 9_4 so that the temperature difference between any two positions of the solder material along the full extent L_AB + L_ BC, + L_CD + L_DA of the solder material 7 of the glass sheet assembly does not exceed 2°C, such as does not exceed 0.5 °C such as does not exceed 0.2 °C. during at least 30%, such as at least 60%, such as at least 90% of the heating by means of the one or more laser light beams.

This relatively low temperature difference may e.g. be obtained by a fast movement speed of the laser light beams and/or by using a plurality of laser light beams.

In some embodiments of the present disclosure, the temperature of the solder material (7) during the step of softening the solder material 7 may be increased by the one or more laser light beams by at least 30 °C such as at least 50 °C in less than 180 seconds, such as less than 120 seconds such as less than 100 seconds. In some embodiments, the heating by means of the one or more beams 9, 9_1, 9_2, 9_3, 9_4 according to the various embodiments of figs. 10-13 may provide a local solder material 7 heating according to one or more embodiments described above in relation to one or more of figs. 7-9, such as a local heating as described in relation to the time period(s) t3-t5, t3-t4 and/or t4-t5 described above according to various embodiments of the present disclosure.

It is generally understood that if one 9 laser light beam (see fig. 10) or more than one 9_1, 9_2, 9_3 laser light beam laser light beam (see e.g. figs. 11, 12 and/or 13) is used for locally heating the solder material 7 so as to heat the solder material, one or more of:
- the power of the respective laser light beam 9_1 and/or 9_2,
- movement speed of the respective laser light beam 9_1 and/or 9_2
- on/off times of the respective laser light beam 9_1 and/or 9_2
may be adapted in order to assure substantially uniform heating of the total/full extent Σ *L_{solder}* = L_AB + L_BC + L_CD + L_DA of the solder material 7 enclosing the gap 5. This may be provided while locally heating the solder material to e.g. temperature T2 and/or T3 as e.g. described above in relation to fig. 7 and/or 8 in the time span t3-t5.

In one or more embodiments of the present disclosure, the one or more laser light beams 9, 9_1, 9_2, 9_3, 9_4 may be moved in the lengthwise direction LDS of the solder material (7) at a combined movement speed of at least 20 m/s such as at least 40 m/s during the step of softening the solder material 7. If only one laser light beam is used (fig. 10), the laser light beam 9 may be moved in the lengthwise direction LDS of the solder material (7) strips A-B, B-C. C-D, D-A at a speed of at least 20 m/s such as at least 40 m/s during the step of softening the solder material.

Hence, in some embodiments, each 9, 9_1, 9_2, 9_3, 9_4 laser light beam may be moved in the lengthwise direction LDS of the solder material 7 at a speed of at least 20 m/s such as at least 40 m/s during the step of softening the solder material.

If for example two beams 9_1 and 9_2 is provided (fig. 11), and each beam is moved with e.g. 30 meters per second, the combined speed will be 60 meters per second. In some embodiments of the present disclosure, one or more of the one or more beams 9_1, 9_2, 9_3, 9_4 may be moved with a speed lower than 20 m/s such as lower than 15 m/s, but the total/combined speed of the laser light beams may be above 20 m/s.

The combined speed may e.g. be determined by summarising the individual beam spot speed. For example, if three laser light beams are used for the local heating and softening, each moving with a speed of 14 m/s, the combined speed will be 14+14+14=42 m/s. It is naturally also understood that each of the one or more laser light beams 9, 9_1, 9_2, 9_3, 9_4 may be moved by means of one or more mirrors with a speed of at least 20 m/s such as at least 40 m/s along the solder material length during the step of softening the solder material 7.

The speed of the laser light beam(s) may, or may not, be adjusted and/or varied during the solder material heating 7 by the beam(s). In some embodiments of the present disclosure, the movement speed of the laser light beam(S) may be maintained constant during at least 30%, such as at least 60%, such as at least 90% or at least 95% of the heating time (see t3-t5 described in more details above) where the one or more laser light beams 9, 9_1, 9_2, 9_3, 9_4 heat and soften the solder material 7.

In some embodiments of the present disclosure, the full extent L_AB + L_ BC + L_CD + L_DA of the solder material 7 may be at least 1.5 meter, such as at least 2 meters, such as at least 3 meters.

In some embodiments of the present disclosure, the full extent L_AB + L_ BC + L_CD + L_DA of the solder material 7 may be between 1.5 meter and 10 meters, such as between 2 meter and 8 meters, such as between 3 meter and 6 meter.

In some embodiments of the present disclosure, the full extent L_AB + L_ BC + L_CD + L_DA of the solder material 7 of the glass sheet assembly 1 may be exposed to a laser light beam 9, 9_1, 9_2, 9_3, 9_4 at least 10 times per second, such as at least 20 times per second, such as at least 30 times per second during the step of softening the solder material.

In some embodiments of the present disclosure, the full extent L_AB + L_ BC + L_CD + L_DA of the solder material 7 of the glass sheet assembly 1 may be exposed to a laser light beam 9, 9_1, 9_2, 9_3, 9_4 at least 500 times, such as at least 1000 times, such as at least 1500 times during the step of softening the solder material 7. It is understood that in some embodiments, e.g. the 500 times, such as at least 1000 times, such as at least 1500 times may also be referred to as 500, such as at least 1000, such as at least 1500 iterations or "heating iterations".

For example, if the solder material 7 of the glass sheet assembly 1 is be exposed to a laser light beam 9, 9_1, 9_2, 9_3, 9_4 spot least 500 times in order to locally heat and soften the solder material, this may correspond to 500 heating iterations. If one laser light beam is used, the laser light beam spot may be moved around the full extent L_AB + L_ BC + L_CD + L_DA of the solder material 7 of the glass sheet assembly 1, and each time the laser light beam spot revisit the same area of the solder material after having heated the remaining solder material, a new heating iteration is started.

In some embodiments of the present disclosure, the power of each of the one or more laser light beams 9, 9_1, 9_2, 9_3, 9_4 may be, such ass be adjusted to, at least 500 W, such as at least 750 W, such as at least 1000W or at least 1200W.

In some embodiments of the present disclosure, the power of each of the one or more laser light beams 9, 9_1, 9_2, 9_3, 9_4 may be, such as be adjusted to, at least 1300 W such as at least 1500 W.

In some embodiments of the present disclosure, the combined heating by means of the one or more laser light beams 9, 9_1, 9_2, 9_3, 9_4 of each meter of the solder material may be at least 30 joule per each one-tenth of a second for a period of at least 30 seconds, such as at least 60 seconds, such as at least 80 seconds, during the step of softening the solder material 7 at the edge sealing station. Hence, if just one laser beam 9 is used, this may in embodiments of the present disclosure provide at least 30 joule per each one-tenth of a second for a period of at least 30 seconds such as at least 60, such as at least 80 seconds during the step of softening the solder material 7 at the edge sealing station. If instead more than one, for example two, laser light beams are used, the power of at least 30 joule per each one-tenth of a second for a period of at least 30 seconds such as at least 60, such as at least 80 seconds during the step of softening the solder material 7 at the edge sealing station may be divided between the two beams, e.g. according to a 50/50 ratio, a 60/40 ratio the like.

In some embodiments of the present disclosure, the combined heating by means of the one or more laser light beams 9, 9_1, 9_2, 9_3, 9_4 of each meter of the solder material may be at least 40 joule, such as at least 50 joule per each one-tenth of a second for a period of at least 30 seconds such as at least 60 seconds or at least 80 seconds during the step of softening the solder material 7 at the edge sealing station.

In some embodiments of the present disclosure, the combined heating by means of the one or more laser light beams 9, 9_1, 9_2, 9_3, 9_4 of each meter of the solder material may be at least 50 joule, such as at least 60 joule per each one-tenth of a second for a period of at least 10 seconds such as at least 20 seconds during the step of softening the solder material 7 at the edge sealing station.

In some embodiments of the present disclosure, the combined heating by means of the one or more laser light beams 9, 9_1, 9_2, 9_3, 9_4 of each meter of the solder material may be less than 150 joule per each one-tenth of a second, such as less than 100 joule per each one-tenth of a second, such as less than 60 joule per each one-tenth of a second, for a period of at least 30 seconds such as at least 60 seconds, such as at least 80 seconds during the step of softening the solder material 7 at the edge sealing station.

In some embodiments of the present disclosure, the combined heating by means of the one or more laser light beams 9, 9_1, 9_2, 9_3, 9_4 of each meter of the solder material may be between 30 joule and 150 joule, such as between such as between 50 joule and 100 joule, per each one-tenth of a second for a period of at least 30 seconds such as at least 60 seconds during the step of softening the solder material 7 at the edge sealing station.

It is generally understood that the power of one or more of the one or more laser light beam(s) may, in embodiments of the present disclosure, be maintained constant or may be regulated, such as increased and/or decreased, during the step of softening (t3-t5) the solder material 7 at the edge sealing station 200.

It is understood that if more than one beam 9, 9_1, 9_2, 9_3, 9_4, such as a laser light beam, is used for the heating and softening of the solder material 7 (see e.g. figs 11, 12 or 13), the beams may be provided by/generated by the same laser light source (e.g. by means of a laser light beam splitter), or may be provided by/generated by different laser light sources. One or more individually adjustable and/or movable mirrors may be considered part of each heater 15, 15_1, 15_2, 15_3, 15_4. The one or mirrors may be controlled, such as moved, in order to obtain the movement speeds and/or movement patters/directions described above according to various embodiments of the present disclosure.

Fig. 15 illustrates schematically a cross section of the glass sheet assembly 1 during evacuation of the gap 2. In this embodiment, an evacuation cup 40 is arranged on an upper, outer side surface 4b of the second glass sheet 4. Thereby, an inner cavity 42 of the evacuation cup 40, which is enclosed by an evacuation cup wall 43, such as an annular wall, is in fluid communication with the gap 5 by means of the evacuation opening 6 that extends through the glass sheet 4.

The inner cavity 42 of the evacuation cup 40 is in fluid communication with a suction connection 40a, such as a piping.

A force clamping is thereby provided so that the glass sheets 3, 4 clamps the solder material 7 that has been heated and softened locally, e.g. by means of one or more laser beams, as e.g. described above. The force clamping is provided by applying a suction to the inner cavity 42 of the evacuation cup 40 by means of the suction connection 40a, e.g. by means of an evacuation pump. This provides a pressure difference between the pressure P2 in the gap 5 and the pressure P1 surrounding the glass sheet assembly 1. The suction connection 40a may be connected to an evacuation pump (see e.g. ref. 8 in figs. 3 and 4).

The evacuation pump 8 may in some embodiments be arranged outside the chamber of an edge sealing station 200. This may e.g. be the case if the chamber of the edge sealing station is heated such as convection heated as e.g. described above. The suction connection 40a may hence connect the evacuation cup inside the chamber (see 201 of figs. 3-4) to an evacuation pump arranged outside the chamber.

The evacuation cup 40, the suction connection and an evacuation pump connected thereto may hence act as a clamping arrangement that may be used for clamping the solder material. In other embodiments, other types of clamping arrangements may be used, and hence, the suction cup may e.g. be omitted during the edge sealing.

In some embodiments, at least the suction connection 40a may act as an obstacle that prevents an emitter / heater (see e.g. refs 15, 15_1, 15_2, 15_3 and/or 15_4) described above, from heating the full length of the solder material 7, see also figs. 13 and/or 14.

A suction cup of substantially similar type as described above in relation to various embodiments of the present disclosure, such as in relation to fig. 15, may also be used at an evacuation and sealing station 300 as e.g. described above in relation to various embodiments, see references 41 in figs. 3-4.

Fig. 16 illustrates schematically an embodiment of the present disclosure, where a mechanical clamping arrangement 70 provides the force clamping in order to obtain that the solder material 7 is clamped when heated by one or more lasers at the edge sealing station. This may e.g. be an alternative to providing the pressure difference by means of an evacuation pump 8 as e.g. previously described. In fig. 16, the clamping arrangement 70 comprises actuators 71 (two are illustrated but it is understood that more or less than two actuators may be provided). The actuators are connected to a pressing body 72, e.g. a pressing plate. In fig. 16, they 71 are connected to the same pressing body 72, but in other embodiments, several pressing bodies 72 (not illustrated) may be displaced (individually or together) by means of one or more actuators 71.

In some embodiments, when (see e.g. t4 described previously) the solder material has been sufficiently heated by the laser(s) 9_1, 9_2, the pressing body is pressed towards the glass sheet assembly 1, thereby deforming the heated and softened solder material 7. However, when providing mechanical force clamping, it may be so that the force clamping is provided even before the local heating by means of one or more laser light beams is started (e.g. at or before the time t3 the local heating of the solder material is started).

The pressing plate(s) 72 may have a size providing that it does not overlap the solder material, thereby allowing the laser light beam(s) to heat the solder material 7 through the glass sheet surface 4b. However, the pressing body 72 may also in some embodiments, be at least partly transparent (e.g. by comprising a glass pressing body) to the laser light and in that case extend to a position opposite the solder material.

The pressing body 42 may be a rigid pressing body such as a metal pressing body, a glass pressing body, a polymer pressing body and/or the like.

In some embodiments, a softer layer 73, such as a resilient layer, such as a resilient mat, for example a silicone mat, a rubber mat or the like, may be placed between the glass sheet assembly 1 surface 4b and the pressing body, e.g. to obtain force distribution and/or glass sheet surface 4b protection.

In some embodiments, e.g. the one or more actuators 71 and/or the pressing body/ies may act as an obstacle preventing any one of two or more laser light beams 9_1, 9_2, from heating the full extent L_AB + L_BC + L_CD + L_DA of the solder material. However, in that case the emitters 15_1, 15_2 may be arranged so that the laser light beams 9_1, 9_2 together heat and soften the full extent L_AB + L_BC + L_CD + L_DA of the solder material.

It is generally understood that if more than one emitter is provided, and hence that a plurality of emitters, such as two or more emitters (see e.g.15_1, 15_2, 15_3, 15_4 described above) these may all heat the solder material through the same glass sheet 4 surface. This may e.g. be provided through the upper glass sheet 4 as e.g. illustrated in various figures (in fig. 16 illustrated by a dotted line), such as in one or more of figs. 11-16 described above.

However, in other embodiments (not illustrated), a first laser light beam may heat the solder material through a first of the glass sheets 4, and a further laser light beam may emit the solder material through the other of the glass sheets 3, e.g. from below of the glass sheet assembly 1. In that case, the support 212 may be adapted and/or the glass sheet assembly 1 may be arranged, so that an emitter may emit the laser light beam towards the lower glass sheet 3 to heat the solder material 7.

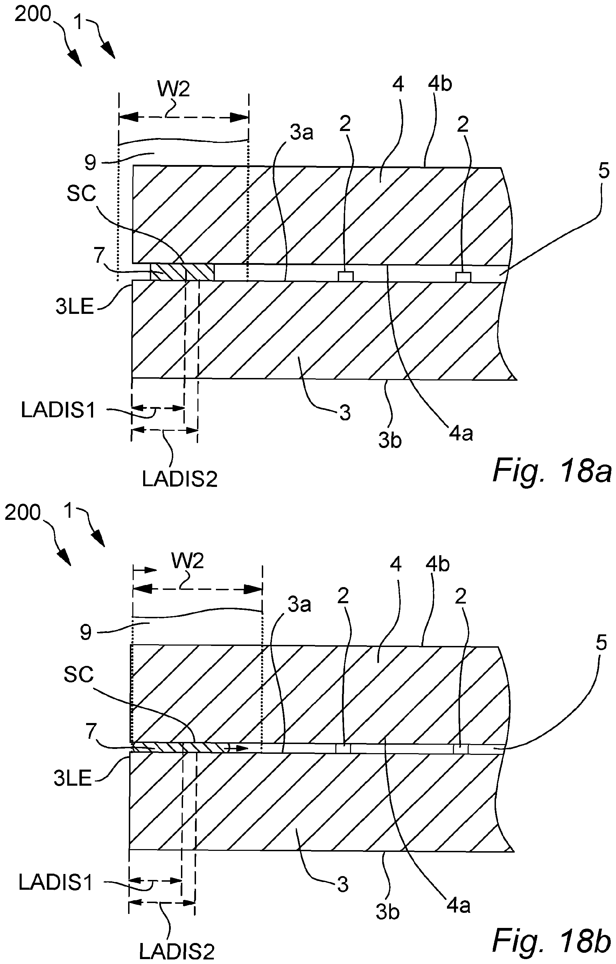

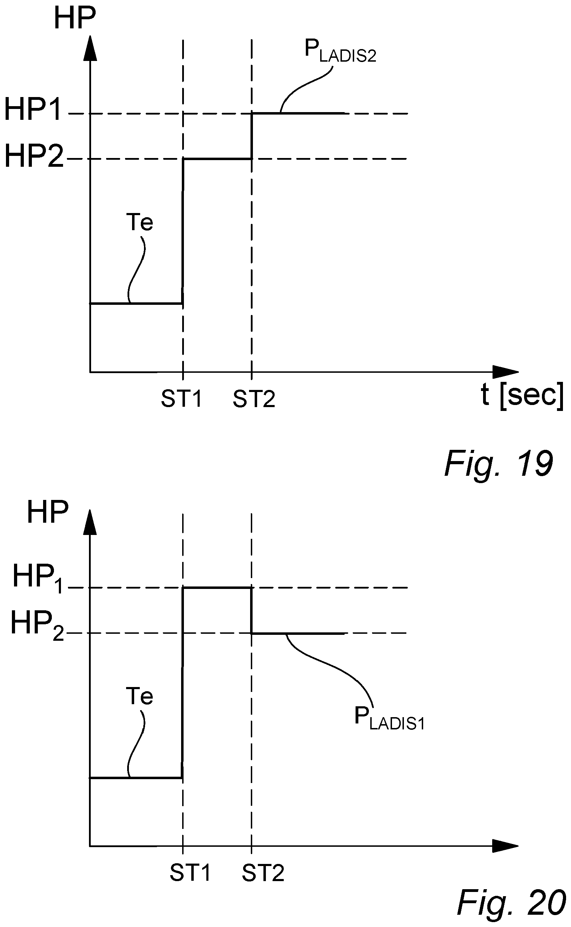

Fig. 17a-17b as well as figs. 18a-18b and figs. 19-20, illustrates schematically adjustment of heating power over the solder material 7 width W1, according to various embodiments of the present disclosure. This may e.g. be provided in order to adapt the power supplied by the one or more heating beams 9 to different regions of the solder material 7 over the solder material width W1. For example because the solder material 7 strip width W1 may change when the solder material 7 is heated by the local heating such as one or more heating beams 9, such as one or more laser light beams, and is clamped by the glass sheets 3, 4. Figs 17a. 17b and figs. 18a-18b illustrates a schematic cross section of a part of the glass sheet assembly 1 during heating by a heating beam(s) such as a laser light beam, according to various embodiments of the present disclosure. Figs. 19-20 schematically illustrates adjustment of heating power subjected to the solder material 7 by the one or more laser light beams, across the solder material width W1, according to various embodiments of the present disclosure.

The glass sheets 3, 4 may (as described above according to various embodiments of the present disclosure) generally be colder than the solder material 7 when the solder material is heated by the laser light beam(s) at an edge sealing station, such as station 200 described above. In some embodiments, the glass sheets 3, 4 of the assembly 1 may have an elevated temperature that is obtained by means of a preheating step, such as at a preheating station 100 as described above (see e.g. one or more of figs. 3, 4, 7, 8), and the average temperature of the glass sheets 3, 4 may still be maintained below, and thus be colder, than the temperature of the solder material that is obtained by means of the one or more laser light beams 9 (see e.g. T2 and/or T3 as explained in more details in relation to e.g. figs. 7 and/or 8).

The local heating beam 9, such as a laser light beam having a width/spot size W2, heats the solder material 7 through the upper glass sheet 4, and the solder material 7 thereby locally heats the glass sheets 3, 4 by conduction heating of the surfaces 4a, 3a abutting the solder material 7. Thus, the heating beam 9 may have the property of substantially not heating the glass sheets 3, 4 directly. Instead, the solder material 7 transfers the heating energy from the heating beam 9 to the glass sheets 3, 4.

The solder material 7 strips extends in a longitudinal direction LDS (see e.g. fig. 2) parallel to adjacent outer edges 3LE, 4LE of the first glass sheet 3 and second glass sheet respectively. The heating by the heating beam(s) 9, such as a laser light beam, causes the solder material 7 to soften, and the solder material 7 is then deformed, e.g. by a force clamping as e.g. described above. Thus, over time (see e.g. t3-t5 of fig. 7 and 8), when the solder material 7 is deformed and the solder material width W1 increases, the solder material will 7 come into contact with a glass sheet surface 3a, 4a that has not yet been heated by the solder material 7 and is thus colder than the solder material. Tests have shown that a temperature drop of the solder material may occur when the force clamping is initiated, see e.g. time t4 at figs 7-8.

In fig. 17b it can be seen that the laser light beam 9 width w2 may be increased on a second softening step when compared to the laser light beam width W2 earlier in the heating of the solder material at a first softening step (fig. 17a). This may provide an adjustment of the heating power perpendicular to the longitudinal extend LDS of the solder material 7 during the heating time t3-t5 and may help to provide that increased heating power is provided/obtained at the second softening step at another region LADIS2 along across the width W1 of the solder material. In this second softening step, the power may be increased at least at the distance LADIS2 further from the edge 3LE than the centre SC of the beam. In the embodiment of fig. 17b, the spot centre SC of the laser light beam 9 however remains substantially at the same position when the laser light beam spot width W2 is increased.

Generally, in some embodiments, the beam spot width W2 may be increased by at least 1 mm such as at least 2 mm, such as at least 3 mm at the second softening step ST2 when compared to the beam spot width W2 at the first softening step ST1.

In some embodiments, the beam spot width W2 may be increased by 1 to 10 millimetres such as by 1 to 6 millimetres, such as by 2 to 4 millimetres at the second softening step ST2 when compared to the beam spot width W2 at the first softening step ST1.

For example, the heating beam, such as a laser light beam, may, in various embodiments of the present disclosure, be adjusted so that the heating power is increased at the second softening step ST2 (see fig 19) during the heating time t3-t5 (see figs 7-8) at a region/ location where the solder material 7 was not initially present at the start of the heating and softening of the solder material 7 by means of the one or more laser light beams, when compared to the heating power subjected to that area region/ location at the start of the heating in the first softening step.

The solder material deformation causes the solder material height H1 (see also fig. 5) to reduce, and causes the solder material width W1 to increase, when compared to the height H1 and width W1 before the deformation of the solder material 7. In fig. 17a, the laser light beam 9 has a width W2 that covers the entire solder material width W1. However, the laser light beam width W2 is here smaller than the final solder material width W1 when the edge sealing at the edge sealing station 200 has ended. Hence, when the solder material width W1 increases due to the deformation of the solder material by means of e.g. a force clamping, the width W2 of the laser light beam may be adjusted, such as increased, to obtain that the entire, enlarged solder material width W1 is subjected to heating by the laser light beam 9.

In some embodiments, at the initiation of the heating of the solder material 7 by means of the laser light beam 9, the solder material 7 is heated in a first softening step ST1 (see fig. 19) to soften the solder material 7 by moving the laser light beam 9 or beams along the lengthwise extent LDS of the solder material 7 at a first distance LADIS1 between the centre of the spot CS of the one or more laser light beams at the solder material 7 and the adjacent outer edge 3LE of the first glass sheet 3. See fig. 17a. This may be provided at a plurality of times/ heating iterations. Thereafter, the centre of the beam spot CS may be maintained at the same distance LADIS 1 to the edge 3LE, but the beam 9 width W2 may be increased/enlarged as illustrated in fig. 17b.

This enlarged laser beam width W2 )(fig. 17b) may e.g. provide that a subsequent heating of the solder material 7 in a second softening step (see ST2 of fig. 19) with the enlarged laser light beam width W2 so as to soften the solder material 7 by moving the laser light beam(s) 9 along the lengthwise extent LDS of the solder material 7 a plurality of times/iterations result in that the heating power from the laser light beam(s) 9 at a second distance LADIS2 to the adjacent outer edge 3LE of the first glass sheet 3 becomes larger/increases (see HP1 in fig. 19) when compared to the heating power (See HP2 of fig. 19) at that second distance LADIS2 when the solder material 7 heating was provided by means of a laser light beam 9 with the initial, smaller laser light width W2. See fig. 17a and HP2 between ST1 and ST2 of fig. 19. The second distance LADIS2 from the edge 3LE is larger than the first distance LADIS1 from the edge 3LE.

Figs. 18a-18b illustrates an embodiment of the present disclosure where the adjustment of the heating power provided by the heating beam(s) 9 perpendicular to the longitudinal extend LDS of the solder material 7 during the heating time t3-t5, so as to provide increased heating power at another region LADIS2 across the width W1 of the solder material 7, is obtained by changing/moving the spot centre SC of the one or more laser light beams 9 from being arranged at the first distance LADIS1 at the first softening step ST1 (see fig. 19) to the adjacent outer edge 3LE (see fig. 18a) to be arranged at the second distance LADIS2 to the adjacent outer edge 3LE (see fig. 18b) at the second softening step ST2. Thereby the spot centre SC is moved further away from the edge 3LE at softening step ST2 compared to the distance LADIS 1 at softening step ST1. This may help to increase the heating power introduced into the solder material 7 at the second distance LADIS2 to the outer edge 3LE during the second softening step ST2 (See heating power HP1 in fig. 19).

In further embodiments of the present disclosure, both the spot width W2 and the distance from the spot centre SC to the adjacent outer edge 3LE may be adjusted in order to adjust the heating power across the solder material width W 1, during the heating (t3-t5) of the solder material by the heating beam(s) such as laser light beam(s).

It is generally understood that the heating power P_{LADIS2} at the area of the solder material 7 at the second distance LADIS2 may be lower (HP2) during the first softening step ST1 than during (HP1) the second heating step ST2. See also fig 19.

In some embodiments of the present disclosure the adjustment of the heating power at the second distance LADIS2 may be obtained by adjusting/varying the amount of laser light beams used for heating the solder material 7 during the heating time t3-t5 in order to adjust the heating power across the solder material width W1, during the heating (t3-t5) at the different softening steps ST1, ST2. For example, a first heating beam may heat a first part of the solder material across the width W1 at softening step ST1, and a second beam may additionally heat the remaining part of the solder material across the width W1 at softening step ST2. The heating power may or may not be adjusted individually for each laser beam to control the heating power at step ST1 and ST2 respectively.

Generally, in further embodiments of the present disclosure, a raster solution may be used for heating the solder material 7 by means of the one or more heating beams 9 such as laser light beams. In this embodiment, the laser light beam(s) 9 may be moved in the longitudinal direction of the solder material (in a plurality of heating iterations as explained in more details above), while also a laser beam raster motion is used so as to ensure heating of the solder material across the solder material width W1. In this case, when the solder material width increases, a controller may in further embodiments of the present disclosure control the heating beam 9 so that it during the raster motion "spend more time", and hence provides more heating energy, at the solder material 7 area further from the adjacent edge 3LE at softening step ST2. The movement speed of the laser light beam in the direction transverse to the longitudinal solder material 7 strip direction LDS may thus be varied over the width W1 of the solder material and in some embodiments be controlled to be different in the different softening steps ST1, ST2. If using a raster solution, the laser beam spot size, such as diameter, may in some further embodiments be smaller than the (initial) solder material width W1, such as less than the half of the solder material width W1, such as less than one quarter of the solder material width W1.

Fig. 19 illustrates schematically the heating power HP1 HP2 adjustment, such as heating beam power HP1 HP2 adjustment, according to embodiments of the present disclosure. Here, the heating power P_{LADIS2} at the area of the solder material 7 at the second distance LADIS2 may become/be lower HP2 during the first softening step ST1 than the heating power HP1 at the same area during the second softening step ST2. This may in some embodiments be provided by one or more of:
- beam width W2 adjustment (figs. 17a-17b),
- beam spot centre SC movement (figs 18a-18b) in the width W1 direction of the solder material 7 strip,
- adjusting number of laser beams used,
- beam raster control
- and/or the like.

Generally, in embodiments of the present disclosure, the second distance LADIS2 to the adjacent edge 3LE, 4LE may be at least 1 mm, such as at least 2 mm larger than the first distance LADIS 1. In embodiments of the present disclosure, the second distance LADIS2 may be at least 3 mm larger than the first distance LADIS 1.

Generally, in embodiments of the present disclosure, the second distance LADIS2 may be in the range of 0.5 to 5 millimetres larger than the first distance LADIS 1, such as in the range of 1 to 4 millimetres larger than the first distance LADIS 1, for example in the range of 1 to 3 millimetres larger than the first distance LADIS 1.

Generally, in embodiments of the present disclosure, the heating power P_{LADIS2} from the one or more laser light beams at the second distance LADIS2 to the adjacent outer edge 3LE may be at least 10%, such as at least 25% higher (See HP1) in the second softening step (ST2) than (see HP1) in the first softening step (ST1), such as at least 35% higher.

In some embodiments of the present disclosure, the heating beam 9 width W2 may be at least 10%, such as at least 20%, such as at least 30% larger or at least 50% larger than the solder material width W1.

Fig. 20 illustrates schematically a graph of the heating power P_{LADIS1} at the first distance LADIS1 during the softening steps ST1, ST2, according to embodiments of the present disclosure. Here the heating power P_{LADIS1} from the one or more laser light beams 9 at the solder material 7 at the first distance LADIS 1 to the adjacent outer edge 3LE of the first glass sheet 3 is lower HP2 than the heating power HP1 at the solder material 7 at the second (larger) distance LADIS2 during the second softening step ST2. In this case, in some embodiments, the largest laser beam power may so to say be moved to be focused/positioned at the at the solder material 7 at the second distance LADIS2 (See figs 17a-18b), in the second softening step ST2. Additionally or alternatively another heating power adjustment may be provided such as by adjusting number of laser light beams used and/or by raster control. Additionally or alternatively, spot width W2 may be adjusted between the first ST1 and second ST2 softening step.

It is understood that in some embodiments of the present disclosure, the adjustment of the heating power HP1, HP2 provided by one or more laser light beams (emitted by one or more emitters) over the width W1 of the solder material 7 strip as described above in relation to various embodiments of the present disclosure, e.g. in relation to one or more of figs 17a-20, may be provided at an edge sealing station 200 as e.g. described further above. For example as described in relation to one or more of figs. 3-16.

It is understood that in some embodiments of the present disclosure, the adjustment of the heating power provided by one or more laser light beams 9 (emitted by one or more emitters) over the width W1 of the solder material 7 strip as described above in relation to various embodiments of the present disclosure, e.g. in relation to one or more of figs 17a-20, may be provided during one or more of the time period(s) t3-t4, t4-t5 and/or t3-t5 as e.g. described in more details in relation to e.g. fig. 7 and/or 8.

It is understood that in some embodiments, a force clamping arrangement as e.g. previously described may provide that the glass sheets 3, 4 clamp and deform the solder material 7 while being heated by the one or more heating beams 9, as e.g. described in more details above according to various embodiments of the present disclosure. In some embodiments, the force clamping is provided by a pressure difference between the pressure in the gap 5 and the pressure P1 surrounding the glass sheet assembly 1. In some embodiments hereof, this may be obtained by evacuating the gap 5, e.g. by means of an evacuation cup, during the heating of the solder material by means of the heating beam(s). This may in some embodiments provide that the solder material 7 width W1 is changed "unevenly" so that it moves more in the direction of the gap 5 than in the direction away from the gap. If providing an adjustment of the heating power over the width W1 of the solder material 7 strip as e.g. described above in relation to e.g. one or more of figs 17a-20, an improved edge seal may e.g. be obtained.

In some embodiments, the force clamping may be initiated during the first softening step ST1 or the second softening step ST2. It is understood that the first and second softening steps ST1, ST2 may be consecutive softening steps as e.g. illustrated in figs. 19 and 20.

It is understood that in some embodiments, the maximum heating temperature of the solder material (See T3 in figs 7-8) may be obtained during the second softening step ST1.

It is understood that in some embodiments, the entire width W1 of the solder material 7 may be heated by the one or more heating beams 9 during both the first and second heating steps ST1, ST2.

It is generally understood that in some embodiments of the present disclosure, the solder material 7 may be heated by the one or more heating beams, (see e.g. 9, 9_1, 9_2, 9_3, 9_4 described above according to various embodiments of the present disclosure), so that the temperature difference between any two positions of the solder material 7 along the full extent L_A-B + L_ B-C, + L_C-D + L_D-A of the solder material 7, and with the same distance (such as e.g. LADIS1, LADIS2) to the adjacent edge (3LE), does not exceed 1 °C , such as does not exceed 0.5 °C, such as does not exceed 0.2 °C.

Figs. 17a-17b moreover illustrates a further embodiment of the present disclosure, where a coating 14 is present on a glass sheet surface(s) 3a facing the gap 5.

In the figs. 17a-17b, one coating 14 is illustrated at surface 3a, but it is understood that one or more coatings 14 may be present on one or both surfaces 3a, 4a in further embodiments of the present disclosure.

In embodiments of the present disclosure, the coating 14 may comprise one or more low-e coating(s) (also known as low-emissivity coatings). The low-e coating may e.g. comprise a low-e coating designed to maximize solar heat gain through the VIG unit. For example so as to maximize solar heat gain into a building to create the effect of "passive" heating and reducing reliance on artificial heating.

In one or more embodiments of the present disclosure, the coating 14 may comprise a low-e coating configured to limit the amount of solar heat that passes through the VIG unit. For example so as to enable limiting the amount of solar heat that passes into a building, e.g. for the purpose of keeping the building cooler and thus reducing energy consumption related to heat management at the room(s) of a building. This may e.g. be preferred in building windows.

Generally, the low-e coating(s) 14 may in embodiments of the present disclosure be configured to reduce the emission of radiant, infrared energy by increasing the amount of radiant heat that is maintained/kept on the side of the VIG unit where it originated, while letting visible light in the visible spectrum pass through the VIG unit.

For example a low-e coating may be configured reflect infrared radiation such as long-wave and/or short-wave infrared radiation entering through the glass sheet(s) 3, 4.

The low-e coating(s) 14 may e.g. be relevant if the VIG unit 30 is for use:
- In a building window allowing sunlight to enter through the VIG unit from a building exterior to a building interior,
- In a cooling storage (such as a refrigerator) door/lid, with view through the VIG unit to the interior storage,
- In an oven door,
- and/or the like.

The low e-coating(s) 14 may e.g., in embodiments of the present disclosure, comprise one or more silver coatings and/or pyrolytic coatings.

In some embodiments of the present disclosure, the one or more coatings 14, such as a low-e coating, may be placed between the solder material 7 and the glass sheet surface(s) 3a and/or 4a.

However, in one or more embodiments of the present disclosure, the coating(s) 14 may be terminated, such as removed, at the area where the solder material 7 interface with the glass sheet surface(s) 3a, 4a. This is illustrated in figs. 17a-17b.

Hence, as illustrated in figs. 17a-17b, said one or more coatings 14 may be terminated with a distance to the outer glass sheet edge 3LE, 4LE so that the glass material of the glass sheet 3, 4 comprising the one or more coatings 14 is direct contact with the solder material 7.

In further embodiments, the one or more coatings 14 may be terminated with a distance to the outer glass sheet edge 3LE, 4LE so as to provide that the solder material 7 is substantially not in contact with the one or more coatings after the heating and softening of the solder material 7 by the one or more laser light beams (9. 9_1, 9_2, 9_3, 9_4) is terminated (see e.g. t5 as previously described). Hence, in this embodiment, the distance between the coating 14 and the outer glass sheet edge 3LE, 4LE may be larger than the final width W1 of the solder material so that the solder material will never get in contact with the coating 14. In other embodiments (not illustrated), the distance between the coating 14 and the outer glass sheet edge 3LE, 4LE may so that the solder material 7 first may get in contact with the coating when it is softened by the laser light beam(s) 9 and deformed to increase the solder material width W1. In this latter embodiment, a part of the solder material 7 may come into contact with the coating 14 while another part of the solder material may not be in contact with the coating 14.

In other embodiments of the present disclosure, the low-e coating(s) 15 may be completely omitted from the VIG unit 30.

Hence, the glass sheet assembly 1 may be provided for the preheating station 100 and/or the edge sealing station 200 with the glass sheets 3,4, the support structures 2 in the gap 5, and the solder material 7 surrounding/enclosing the gap 5 as e.g. illustrated in several of the figures described above, such as in figs. 1 and 10.

Fig. 21 illustrates schematically a heating beam 9', such as a laser light beam, from a heating beam source 17.

In fig. 21, a heating beam source 17, such as a laser light source, provides a "source" heating beam 9' that is emitted from the laser light source 17. The source heating beam 9' is directed 9, such as redirected, such as reflected, towards 9 the glass sheet assembly 1 by a heater 15, such by an emitter, such as by means of a mirror. The mirror 15 may be comprised in or by the heater or emitter.

The heating beam 9' energy from the source 17 is redirected, such as reflected, by the heater and emitted in the redirected heating beam 9 towards the solder material 7 of the glass sheet assembly so as to heat it 7. The heating beam is in fig. 22 transmitted through a chamber 201 wall 230, such as a top wall, which is transparent to the laser light beam 9, for example a glass wall.

The mirror 15 may be or comprise a beam steering mirror. A mirror controller 16 may control/steer the mirror 15 so as to move the redirected beam 9 along the longitudinal direction LDS of one or more of the solder material strips of the glass sheet assembly 1 to heat the solder material 7, e.g. as previously described above according to various embodiments of the present disclosure. The mirror controller 16 may comprise one or more hardware processors, circuitries and/or the like adapted to control the mirror based on control software stored in a data storage. The mirror 15 may comprise a Tip/Tilt Platform, such as a Piezo Tip/Tilt Platform, which is controlled by the controller to Tip/Tilt the mirror 15 to move the laser beam 9. Hence, one or more of the mirror(s) 15, heating beam source(s) 17, controller(s) 16 and/or the like may be located outside the chamber 201 in which the glass sheet assembly 1 is arranged. This may e.g. be an advantage in case the chamber 201 is heated by a heater 220, such as a convection heater, to a temperature above 150 °C, such as above 250 °C or above 300 °C, such as above a (if the solder material if the solder material is a glass solder material) glass transition temperature Tg of the solder material.

Aspects of the present disclosures are defined in the enclosed items.

### Items

1. A method of processing a glass sheet assembly (1) for a vacuum insulated glass (VIG) unit (30), wherein the method comprises the step of
   - providing a glass sheet assembly (1) comprising a first glass sheet (3) and a second glass sheet (4), wherein a plurality of support structures (2) for maintaining a gap (5) between said first glass sheet (3) and said second glass sheet (4) of the vacuum insulated glass unit (30) are arranged between major surfaces (3a, 4a) of the glass sheets (3, 4), and wherein the glass sheet assembly (1) comprises a solder material (7) for providing an edge sealing for enclosing and sealing the gap (5) between the glass sheets (3, 4),

   the method comprising the subsequent steps of
      - heating the solder material (7) in a first softening step (ST1) so as to soften the solder material by moving one or more laser light beams (9, 9_1, 9_2, 9_3, 9_4, 9_5) along the lengthwise extent (LDS) of the solder material (7) at a first distance (LADIS 1) between the centre of the spot (CS) of the one or more laser light beams at the solder material (7) and an adjacent outer edge (3LE) of the first glass sheet (3), and
      - subsequently heating the solder material (7) in a second softening step (ST2) so as to soften the solder material by moving one or more laser light beams (9, 9_1, 9_2, 9_3, 9_4, 9_5) along the lengthwise extent (LDS) of the solder material (7),
   wherein at the second distance (LADIS2) to the adjacent outer edge (3LE) the heating power (HP) from the one or more laser light beams (9, 9_1, 9_2, 9_3, 9_4, 9_5) at the second softening step (ST2) is larger (HP₁) than the heating power (HP₂) during the first softening step (ST1),
   and the second distance (LADIS2) being larger than the first distance (LADIS 1).
2. The method of item 1, wherein the heating power (HP) from the one or more laser light beams (9, 9_1, 9_2, 9_3, 9_4, 9_5) at the solder material (7) at the first distance (LADIS 1) to the adjacent outer edge (3LE) of the first glass sheet (3) is lower (HP₂) than the heating power (HP₁) at the solder material (7) at the second distance (LADIS2) during the second step (ST2).
3. The method of item 1 or 2, wherein the second distance (LADIS2) is in the range of 1 to 3 millimetres larger than the first distance (LADIS 1).
4. The method according to any of the preceding items, wherein the heating power from the one or more laser light beams (9, 9_1, 9_2, 9_3, 9_4, 9_5) at the second distance (LADIS2) to the adjacent outer edge (3LE) is at least 25% higher (HP1) in the second softening step (ST2) than in the first softening step (ST1), such as at least 35% higher.
5. The method according to any of the preceding items, wherein the centre (SC) of the spot of the one or more laser light beams (9, 9_1, 9_2, 9_3, 9_4, 9_5) in the second softening step (ST2) is changed from the first distance (LADIS1) to the adjacent outer edge (3LE) to the second distance (LADIS2) to the adjacent outer edge.
6. The method according to any of the preceding items, wherein the width (W2) of the spot of the one or more laser light beams (9, 9_1, 9_2, 9_3, 9_4, 9_5) in the second softening step (ST2) is increased as compared to the width (W2) of the spot of the one or more laser light beams (9, 9_1, 9_2, 9_3, 9_4, 9_5) in the first softening step (ST1), such as increased by 1 to 6 millimetres such as by 2-4 millimetres.
7. The method according to any of the preceding items, wherein a force clamping (t4) of the glass sheet assembly (1) is provided by means of a clamping arrangement (40, 8, 40a, 70) so that the glass sheets (3, 4) clamp and deform the solder material (7),
   such as wherein the force clamping comprises providing a pressure difference between the pressure in the gap (5) and the pressure surrounding the glass sheet assembly (1).
8. The method according to item 7, wherein the force clamping is provided by the step of evacuating the gap (5).
9. The method according to any of items 7 and 8, wherein the force clamping is provided during the first softening step (ST1) or the second softening step (ST2).
10. The method according to item 9, wherein the force clamping is provided when the solder material (7) has reached a temperature (T2) in the range of 10 to 30 °C below the maximum temperature (T3) reached by the solder material (7) during (t3-t5) the softening steps (ST1, ST2).
11. The method according to any of items 7 to 10, wherein the force clamping is provided when the solder material (7) has reached a temperature (T2, T3) in the range of 350 to 400 °C, such as in the range of 365 to 385 °C.
12. The method according to any of items 7 to 11, wherein the pressure difference between the pressure in the gap (5) and the pressure surrounding the glass sheet assembly is at least 0.5 bar, such as at least 0.8 bar, such as at least such as at least 0.9 bar.
13. The method according to any of the preceding items, wherein the power of each of the one or more laser light beams (9, 9_1, 9_2, 9_3, 9_4, 9_5) is at least 500 W, such as at least 750 W.
14. The method according to any of the preceding items, wherein the solder material (7) is a glass solder material comprising a low melting point glass solder frit material.
15. The method according to item 14, wherein the glass solder material is heated to a temperature in the range of 40 to 120 °C, preferably in the range of 60 to 100 °C, above the glass transition temperature (Tg) of the glass solder material, during the first softening step (ST1) and the second softening step (ST2).
16. The method according to item 14 or 15, wherein the glass solder material (7) is heated to a temperature in the range of 350 to 420 °C, preferably in the range of 370 to 410 °C, during first softening step and the second softening step.
17. The method according to any of items 7 to 11 and any of items 13 to 16, wherein the force clamping is provided when the solder material (7) has reached a temperature in the range of 30 to 100 °C, preferably in the range of 40 to 80 °C, above the glass transition temperature (Tg) of the glass solder material.
18. The method according to any of items 7 to 11 and any of items 13 to 17, wherein the force clamping is provided when the solder material has reached a temperature in the range of 350 to 380 °C, such as in the range of 365 to 375 °C.
19. The method of any of the preceding items, wherein the first glass sheet and the second glass sheet extend substantially horizontally.
20. The method of any of the preceding items, wherein the first glass sheet as well as the second glass sheet are tempered glass sheets.
21. The method according to any of the preceding items, wherein the full extent (L_AB + L_ BC, + L_CD + L_DA) of the solder material (7) of the glass sheet assembly is exposed to a laser light beam (9, 9_1, 9_2, 9_3, 9_4) at least 500 times, such as at least 1000 times, such as at least 1500 times during the step of softening the solder material.
22. The method according to any of the preceding items, wherein the solder material 7 has a width (W1) between 2 mm and 8 mm, such as between 3 mm and 6 mm, for example between 4 mm and 5 mm (both end points included) at initiation of the first softening step (ST1).
23. The method according to any of the preceding items, wherein the solder material (7) width (W1) is deformed so as to have a final solder material width (W1) of between 4 mm and 16 mm, such as between 5 mm and 11 mm, for example between 7 mm and 9 mm when the second step is terminated.
24. The method according to any of the preceding items, wherein one or both of the first and second glass sheets (3, 4) have a thickness between 1 mm and 6 mm, such as between 2 mm and 4 mm, for example between 2.5 mm and 3.5 mm including both end points
25. The method according to any of the preceding items, wherein one or both of the first and second glass sheets (3, 4) have a thickness between 1 mm and 6 mm, such as between 2 mm and 4 mm, for example between 2.5 mm and 3.5 mm including both end points
26. The method according to any of the preceding items, wherein the distance between the major glass sheet (3, 4) surfaces (3a, 4a) facing the gap (5) of the vacuum insulated glass unit (30) is 0.5 mm or below, such as 0.3 mm or below, for example 0.2 mm or below.
27. The method according to any of the preceding items, wherein one or both of the major glass sheet surfaces (3a, 4a) facing the gap comprises one or more coatings (14) , such as comprising one or more low-e coatings.
28. The method according to item 27, wherein said one or more coatings (14) is terminated with a distance to the outer glass sheet edge (3LE, 4LE) so that the glass material of the glass sheet (3, 4) comprising the one or more coatings (14) is direct contact with the solder material.
29. The method according to item 28, wherein the one or more coatings (14) is terminated so that the solder material (7) is substantially not in contact with the one or more coatings after the heating and softening of the solder material (7) by the one or more laser light beams (9. 9_1, 9_2, 9_3, 9_4) is terminated (t5, t6).
30. The method according to any of the preceding items, wherein the method further comprises the consecutive steps of
   - evacuating the gap (5) to a substantially vacuum, and
   - sealing off (6a) the gap (5) from the surroundings, so as to obtain the vacuum insulated glass unit (30).
31. The method according to any of items 1-30, wherein the first softening step (ST1) and second softening step (ST2) are provided at an edge sealing station (200) of a production line (10), and wherein the method comprises the further consecutive steps of
   a) removing the glass sheet assembly (20) from the edge sealing station (200) of the production line (10),
   b) positioning the glass sheet assembly (200) at an evacuation station (300) of the production line (10),
   c) evacuating the gap (5) to a substantially vacuum, and
   d) sealing off (6a) the gap (5) from the surroundings so as to obtain the vacuum insulated glass unit (30).
32. The method according to any of items 7-10, wherein the force clamping is eliminated (t6) when or after the first (ST1) and second (ST2) softening steps are finished (t5), such as wherein force clamping is eliminated at a time (t6) after said heating (ST1, ST2) by means of the one or more laser light beams (9, 9_1, 9_2, 9_3, 9_4) is stopped (t5).
33. The method according to any of the preceding items, wherein said one or more laser light beams (9, 9_1, 9_2, 9_3, 9_4) are moved in the lengthwise direction of the solder material (7) at a combined speed of at least 20 m/s such as at least 40 m/s during the first (ST1) and/or second (ST2) softening step (7).
34. The method according to any of the preceding items, wherein said one or more laser light beams (9, 9_1, 9_2, 9_3, 9_4) each is/are moved in the lengthwise direction (LDS) of the solder material (7) at a speed of at least 20 m/s such as at least 40 m/s during the first (ST1) and/or second (ST2) softening step (7).
35. The method according to any of the preceding items, wherein the combined heating by means of the one or more laser light beams (9, 9_1, 9_2, 9_3, 9_4) of each meter of the solder material is at least 30 joule per each one-tenth of a second for a period of at least 30 seconds such as at least 60 seconds during the first (ST1) and/or second (ST2) softening step (7).
36. The method according to any of the preceding items, wherein the solder material (7) during the first and/or second softening step (ST1, ST2), is heated by the one or more laser light beams (9, 9_1, 9_2, 9_3, 9_4) so that the temperature difference between any two positions of the solder material (7) along at least 90% of the full extent (L_A-B + L_ B-C, + L_C-D + L_D-A) of the solder material (7), does not exceed 0.5 °C, such as does not exceed 0.2 °C.
37. The method according to any of the preceding items, wherein the solder material (7) during the first and/or second softening step (ST1, ST2), is heated by the one or more laser light beams (9, 9_1, 9_2, 9_3, 9_4) so that the temperature difference between any two positions of the solder material (7) along at least 90% of the full extent (L_A-B + L_ B-C, + L_C-D + L_D-A) of the solder material (7), and with the same distance (LADIS1, LADIS2) to the adjacent edge (3LE), does not exceed 0.5 °C, such as does not exceed 0.2 °C.
38. The method according to any of the preceding items, wherein the temperature of the solder material (7) is increased by means of the one or more laser light beams (9, 9_1, 9_2, 9_3, 9_4) by at least 30 °C such as at least 50 °C in less than 180 seconds, such as less than 120 seconds such as less than 100 seconds.
39. The method according to any of the preceding items, wherein the power of each of the one or more laser light beams (9, 9_1, 9_2, 9_3, 9_4,) is at least 500 W, such as at least 750 W, such as at least 1000W, during the first and/or second softening step (ST1, ST2).
40. The method according to any of the preceding items, wherein the full extent (L_AB + L_ BC, + L_CD + L_DA) of the solder material (7) is at least 1.5 meter, such as at least 2 meter, such as at least 3 meter.
41. The method according to any of the preceding items, wherein the full extent (L _AB + L_ BC + L_CD + L_DA) of the solder material (7) is between 1.5 meter and 10 meter, such as between 2 meter and 8 meter, such as between 3 meter and 6 meter.
42. The method according to any of the preceding items, wherein the full extent (L _AB + L_ BC+ L_CD + L_DA) of the solder material (7) is exposed to a laser light beam (9, 9_1, 9_2, 9_3, 9_4) at least 10 times per second, such as at least 20 times per second, such as at least 30 times per second during the first and/or second softening step (ST1, ST2).
43. The method according to any of the preceding items, wherein the total heating time of the solder material (7) during the first and second softening step (ST1, ST2) by means of the one or more laser light beams (9, 9_1, 9_2, 9_3, 9_4) is less than 5 minutes, such as less than 2 minutes, such as less than 100 seconds.
44. The method according to any of the preceding items, wherein the glass sheet assembly (1) is preheated, such as by means of convection heating, at a preheating station (100) of a production line (10), and subsequently moved into an edge sealing station (200) while remained preheated so as to be subjected to said softening of the solder material (7) by means of said one or more laser light beams (9, 9_1, 9_2, 9_3, 9_4).
45. The method according to item 44, wherein the glass sheet assembly (1) is preheated at the preheating station (100) to a maximum preheating temperature of at least 30 °C below the highest temperature of the solder material reached during the step of softening the solder material (7), such as at least 50 °C below, preferably in the range of 30 °C to 140 °C below, more preferably in the range of 50 °C to 100 °C below.

## Claims

1. A method of processing a glass sheet assembly (1) for a vacuum insulated glass (VIG) unit (30), wherein the method comprises the step of
- providing a glass sheet assembly (1) comprising a first glass sheet (3) and a second glass sheet (4), wherein a plurality of support structures (2) for maintaining a gap (5) between said first glass sheet (3) and said second glass sheet (4) of the vacuum insulated glass unit (30) are arranged between major surfaces (3a, 4a) of the glass sheets (3, 4), and wherein the glass sheet assembly (1) comprises a solder material (7) for providing an edge sealing for enclosing and sealing the gap (5) between the glass sheets (3, 4),
the method comprising the subsequent steps of
- heating the solder material (7) in a first softening step (ST1) so as to soften the solder material by moving one or more laser light beams (9, 9_1, 9_2, 9_3, 9_4, 9_5) along the lengthwise extent (LDS) of the solder material (7) at a first distance (LADIS 1) between the centre of the spot (CS) of the one or more laser light beams at the solder material (7) and an adjacent outer edge (3LE) of the first glass sheet (3), and
- subsequently heating the solder material (7) in a second softening step (ST2) so as to soften the solder material by moving one or more laser light beams (9, 9_1, 9_2, 9_3, 9_4, 9_5) along the lengthwise extent (LDS) of the solder material (7),
wherein at the second distance (LADIS2) to the adjacent outer edge (3LE) the heating power (HP) from the one or more laser light beams (9, 9_1, 9_2, 9_3, 9_4, 9_5) at the second softening step (ST2) is larger (HP₁) than the heating power (HP₂) during the first softening step (ST1),
and the second distance (LADIS2) being larger than the first distance (LADIS 1).

2. The method of claim 1, wherein the heating power (HP) from the one or more laser light beams (9, 9_1, 9_2, 9_3, 9_4, 9_5) at the solder material (7) at the first distance (LADIS 1) to the adjacent outer edge (3LE) of the first glass sheet (3) is lower (HP₂) than the heating power (HP₁) at the solder material (7) at the second distance (LADIS2) during the second step (ST2).

3. The method of claim 1 or 2, wherein the second distance (LADIS2) is in the range of 1 to 3 millimetres larger than the first distance (LADIS 1).

4. The method according to any of the preceding claims, wherein the heating power from the one or more laser light beams (9, 9_1, 9_2, 9_3, 9_4, 9_5) at the second distance (LADIS2) to the adjacent outer edge (3LE) is at least 25% higher (HP1) in the second softening step (ST2) than in the first softening step (ST1), such as at least 35% higher.

5. The method according to any of the preceding claims, wherein the centre (SC) of the spot of the one or more laser light beams (9, 9_1, 9_2, 9_3, 9_4, 9_5) in the second softening step (ST2) is changed from the first distance (LADIS1) to the adjacent outer edge (3LE) to the second distance (LADIS2) to the adjacent outer edge.

6. The method according to any of the preceding claims, wherein the width (W2) of the spot of the one or more laser light beams (9, 9_1, 9_2, 9_3, 9_4, 9_5) in the second softening step (ST2) is increased as compared to the width (W2) of the spot of the one or more laser light beams (9, 9_1, 9_2, 9_3, 9_4, 9_5) in the first softening step (ST1), such as increased by 1 to 6 millimetres such as by 2-4 millimetres.

7. The method according to any of the preceding claims, wherein a force clamping (t4) of the glass sheet assembly (1) is provided by means of a clamping arrangement (40, 8, 40a, 70) so that the glass sheets (3, 4) clamp and deform the solder material (7),
such as wherein the force clamping comprises providing a pressure difference between the pressure in the gap (5) and the pressure surrounding the glass sheet assembly (1).

8. The method according to claim 7, wherein the force clamping is provided by the step of evacuating the gap (5).

9. The method according to any of claims 7 and 8, wherein the force clamping is provided during the second softening step (ST2) and preferably also during the first softening step (ST1).

10. The method according to claim 9, wherein the force clamping is provided when the solder material (7) has reached a temperature (T2) in the range of 10 to 30 °C below the maximum temperature (T3) reached by the solder material (7) during (t3-t5) the softening steps (ST1, ST2).

11. The method according to any of claims 7 to 10, wherein the force clamping is provided when the solder material (7) has reached a temperature (T2, T3) in the range of 350 to 400 °C, such as in the range of 365 to 385 °C.

12. The method according to any of claims 7 to 11, wherein the pressure difference between the pressure in the gap (5) and the pressure surrounding the glass sheet assembly is at least 0.5 bar, such as at least 0.8 bar, such as at least such as at least 0.9 bar.

13. The method according to any of the preceding claims, wherein the power of each of the one or more laser light beams (9, 9_1, 9_2, 9_3, 9_4, 9_5) is at least 500 W, such as at least 750 W.

14. The method according to any of the preceding claims, wherein the solder material (7) is a glass solder material comprising a low melting point glass solder frit material.

15. The method according to claim 14, wherein the glass solder material is heated to a temperature in the range of 40 to 120 °C, preferably in the range of 60 to 100 °C, above the glass transition temperature (Tg) of the glass solder material, during the first softening step (ST1) and the second softening step (ST2).
